(19) Europäisches Patentamt / European Patent Office / Office européen des brevets

(11) EP 3 384 344 B1

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **16828931.2**

(22) Anmeldetag: **02.12.2016**

(51) Int Cl.:
***G02F 1/061*** *(2006.01)*

(86) Internationale Anmeldenummer:
**PCT/EP2016/025164**

(87) Internationale Veröffentlichungsnummer:
**WO 2017/092877 (08.06.2017 Gazette 2017/23)**

(54) **ELEKTRISCH STEUERBARES OPTISCHES ELEMENT AUS EINER OPTISCH ISOTROPEN FLÜSSIGKEIT, INSBESONDERE LINSE UND VERFAHREN ZU DESSEN HERSTELLUNG AUF BASIS FLÜSSIGER KOMPOSITE**

ELECTRICALLY CONTROLLABLE OPTICAL ELEMENT MADE OF AN OPTICALLY ISOTROPIC LIQUID, IN PARTICULAR LENS, AND METHOD FOR THE PRODUCTION THEREOF ON THE BASIS OF LIQUID COMPOSITES

ÉLÉMENT OPTIQUE COMMANDABLE ÉLECTRIQUEMENT CONSTITUÉ D'UN LIQUIDE OPTIQUEMENT ISOTROPE, EN PARTICULIER UNE LENTILLE, ET PROCÉDÉ DE PRODUCTION DE CELUI-CI À PARTIR DE COMPOSITES LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2015 DE 102015015436**

(43) Veröffentlichungstag der Anmeldung:
**10.10.2018 Patentblatt 2018/41**

(73) Patentinhaber:
- **FocusTec GmbH**
  **82131 Stockdorf Gem. Gauting (DE)**
- **Faustig, Stephanie**
  **80796 München (DE)**
- **Hoffmann, Klaus**
  **81476 München (DE)**

(72) Erfinder:
- **HOFFMANN, Klaus**
  **81476 München (DE)**
- **STUMPE, Joachim**
  **14641 Nauen (DE)**
- **FISCHER, Thomas**
  **10317 Berlin (DE)**
- **RUTLOH, Michael**
  **12679 Berlin (DE)**

(74) Vertreter: **Dreykorn-Lindner, Werner**
**Patentanwalt**
**Steinlachstrasse 2**
**90571 Schwaig (DE)**

(56) Entgegenhaltungen:
**WO-A1-2014/176717 US-A1- 2005 254 405**

- **YANG YOUNG-CHEOL ET AL: "Electro-optic Kerr effect in polymer-stabilized isotropic liquid crystals", APPLIED PHYSICS LETTERS, A I P PUBLISHING LLC, US, Bd. 98, Nr. 2, 13. Januar 2011 (2011-01-13), Seiten 23502-23502, XP012139194, ISSN: 0003-6951, DOI: 10.1063/1.3533396**
- **ZHU JI-LIANG ET AL: "Improved Kerr constant and response time of polymer-stabilized blue phase liquid crystal with a reactive diluent", APPLIED PHYSICS LETTERS, A I P PUBLISHING LLC, US, Bd. 102, Nr. 7, 18. Februar 2013 (2013-02-18), Seiten 71104-71104, XP012170089, ISSN: 0003-6951, DOI: 10.1063/1.4793416 [gefunden am 2013-02-20]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 384 344 B1

## Beschreibung

Die Erfindung betrifft, gemäß dem Patentanspruch 1, eine elektrisch steuerbares optisches Element, insbesondere eine Linse aus einer optisch isotropen Flüssigkeit und gemäß dem Patentanspruch 9 ein Verfahren zu dessen Herstellung auf Basis flüssiger Komposite.

Einstellbare optische Elemente sind gegenwärtig vorrangig mechanische Systeme. Diese sind schwer und voluminös sowie aufgrund der Verwendung mechanischer Triebe o.a. störanfällig und oft zu träge. Nicht-mechanisch optische Elemente sind deswegen von Vorteil und Gegenstand gegenwärtiger Entwicklung. Während für derartige optische Elemente mit geringerem nutzbarem Durchmesser schon Lösungen kommerzialisiert wurden, ist dies bei größeren Aperturen noch nicht der Fall.

Als elektrooptischen Kerr-Effekt (J. Kerr 1875), quadratischen elektrooptischen Effekt oder elektrische Doppelbrechung bezeichnet man das Auftreten einer mit der elektrischen Feldstärke eines angelegten Feldes quadratisch anwachsenden optischen Doppelbrechung. Bei diesem Effekt richten sich Moleküle mit permanentem Dipolmoment in einer isotropen Flüssigkeit im elektrischen Feld aus. Durch diese Ausrichtung wird das Material im Feld optisch anisotrop, wobei in Feldrichtung ein höherer Brechungsindex und senkrecht dazu ein geringerer Brechungsindex, verglichen mit der isotropen Flüssigkeit im spannungsfreien Zustand, eingestellt werden. Bei einer Kerr-Zelle wird das Brechungs- und Polarisationsverhalten eines Materials durch ein außen angelegtes elektrisches Feld verändert, so dass sich elektrische in optische Signale umwandeln lassen. Quer zur Richtung des durchfallenden Lichts wird über Elektrodenplatten in der Kerr-Flüssigkeit ein elektrisches Feld angelegt. Als Kerr-Flüssigkeit wird meist reines Nitrobenzen verwendet, welches eine Kerr-Konstante K von 2,44 x $10^{-12}$ $m/V^2$ hat, bei Raumtemperatur flüssig ist und gut mit Alkoholen, Ether und Benzol gemischt werden kann. Vergleichsweise hat Nitrotoluol eine Kerr-Konstante K von 1,37 x $10^{-12}$ $m/V^2$ und Wasser eine Kerr-Konstante K von 5,1 x $10^{-14}$ $m/V^2$. Bei der genannten Flüssigkeit und üblichen Zellgrößen im Zentimeterbereich braucht man dabei elektrische Spannungen im Bereich weniger Kilovolt. Vorder- und Rückseite der Kerr-Zelle sind lichtdurchlässig aus Glas, die Seitenwände aus Metall stellen Elektrodenplatten dar.

Die technische Anwendung Kerrzelle ist somit ein Kondensator mit der Kerrflüssigkeit - meistens Nitrobenzen - als Dielektrikum. Sie wird zwischen gekreuzte Polarisatoren gebracht, deren optische Hauptachsen gegen die Richtung des elektrischen Feldes um je 45° geneigt sind. Liegt keine Spannung an der Zelle, so vermag das Licht diese Anordnung nicht zu durchdringen.

Im elektrischen Feld wird nun die Kerrflüssigkeit doppelt brechend, d.h. die in Richtung des Feldes schwingende Lichtkomponente erhält eine andere Fortpflanzungsgeschwindigkeit als die senkrecht zum Felde schwingende. Zwischen beiden ist somit beim Austritt aus der Kerrzelle eine Phasenverschiebung $\delta$ vorhanden. Durch die optische Anordnung tritt nunmehr die Lichtmenge L, die mit $\delta$ und der Lichtmenge $L_0$, die im günstigsten Falle auftritt, in folgender Beziehung steht:

$$L = L_0 \bullet \sin^2 \delta/2$$

Die Phasenverschiebung $\delta$ ist abhängig von der Feldstärke E, der Länge 1 des Lichtweges zwischen den Kondensatorplatten und der Kerrkonstanten des Dielektrikums B gemäß der Beziehung

$$\delta = 2\pi \bullet B \bullet 1 \bullet E^2$$

Damit wird

$$L = L_0 \bullet \sin^2 (\pi \bullet B \bullet 1 \bullet E^2)$$

Um die Empfindlichkeit der Kerrzelle als Lichtrelais wesentlich zu erhöhen ist es aus der DE 555 249-A bekannt, den Teilstrahlen des verwendeten polarisierten Lichtes außer der in der Kerrzelle erzeugten, spannungsabhängigen Phasenverschiebung noch eine weitere unveränderliche Phasenverschiebung erteilt wird. Zur Erzeugung der zusätzlichen Phasenverschiebung wird eine doppelt brechende Kristallplatte in den Lichtweg geschaltet.

Bei Flüssigkeiten - wie Nitrobenzen - ist die gefundene Brechungsindex-Differenz sehr niedrig, selbst wenn Spannungen im Kilovolt-Bereich angelegt werden. Auf Grund des geringen Ausmaßes des lange bekannten Kerr-Effekts scheint die Herstellung aktiver optischer Elemente auf dessen Basis zunächst ausgeschlossen. So beträgt die Kerr-Konstante, die die Stärke des Kerr-Effektes quantifiziert, für Nitrobenzen (Zinth, W., Optik, Oldenbourg-Verlag, München, 2011) nur ca. 2,44 x $10^{-12}$ $mV^{-2}$.

Seit vielen Jahrzehnten wurden immer wieder Versuche angestellt, um Flüssigkeiten zu finden, die eine höhere Kerrkonstante als das bisher verwendete Nitrobenzen besitzen und dadurch den gleichen Effekt bei niedrigerer Steuerspannung ergeben. Beispielsweise ist aus der DE 622 368-A eine Kerrzellenflüssigkeit bekannt, bei der Doppel- oder Dreifachsubstitute des Benzolringes, die bei Zimmertemperatur in festem Aggregatzustand sind, in ein Lösemittel gebracht werden, dessen Kerrkonstante in der Größenordnung des Nitrobenzens liegt. Zweckmäßig wird dabei der Substituent $NO_2$ bevorzugt. Als Lösemittel werden gemäß der DE 622 368-A beispielsweise verwendet:

Nitrobenzen
Nitrotoluol meta
Nitrotoluol ortho

Als zu lösende Substanzen werden vorgeschlagen: Dinitrobenzen ortho, Nitranilin (vorzugsweise para), Nitrotoluol para, Chlornitrobenzol ortho, Chlordinitrobenzen 1:2:3, Dichlornitrobenzen 1:2:3, Nitronaphthalin alpha, Dinitronaphthalin 1:8.

Weiterhin werden gegenwärtig Elemente eingesetzt, die auf Basis makroskopisch orientierter flüssigkristalliner Materialien basieren. Diese Systeme weisen jedoch den Nachteil auf, dass sie nur auf eine Polarisationsrichtung des Lichtes wirken, Licht mit der dazu senkrechten Polarisationsrichtung hingegen nahezu unbeeinflusst lassen. Aufgrund dieser Tatsache werden entweder absorptive Polarisatoren mit solchen Elementen kombiniert. Dies führt aber notwendiger Weise zu einer Reduzierung der Lichtmenge auf weniger als 50%. Um diesen Nachteil zu beseitigen wurde vorgeschlagen zwei (oder mehr) baugleiche Elemente orthogonaler Orientierung miteinander zu kombinieren, was zu einem deutlich höheren Aufwand führt und zusätzliche Fehlerquellen durch räumliches Übersprechen, zu optischen Verlusten und zusätzlichen Problemen hinsichtlich der genauen Ausrichtung der Elemente zueinander bewirkt.

Weitere isotrope LC Zustände sind streuende PDLC, wenig-streuende Nano-PDLC Systeme und isotrope polymerverstärkte isotrope Blaue LC Phasen. Diese sind durch hohe Schaltspannungen, die durch die Polymermatrix und Domänengrenzen verursacht werden, gekennzeichnet. Im Gegensatz zu reflektiven Elementen, wie LC Phasenmodulatoren, stört bei transmissiven Elementen die auftretende Reststreuung.

Bei isotropen Flüssigkeiten mit hoher Anisotropie des Dipolmomentes und stäbchenförmiger Molekülform können wesentlich größere Brechungsindex-Differenzen erzielt werden, so dass um Größenordnungen höhere Kerr-Konstanten gefunden werden. Dies wurde zum Beispiel für isotrope Phasen von Flüssigkristallen bei höheren Temperaturen bereits gezeigt.

Deutlich höhere Werte können in isotropen Schmelzen von Flüssigkristallen (J. Chem. Soc, Faraday Trans. 2, 1976, 72, 1447-1458 / DOI: 10.1039/F29767201447) knapp oberhalb der Klärtemperatur oder in polymerstabilisierten isotropen Flüssigkristallen (Appl. Phys. Lett. 98, 023502 (2011)/DOI: 10.1063/1.3533396) und polymerstabilisierten Blauen Phasen von Flüssigkristallen gemessen werden. Hier wurden Kerr-Konstanten von bis zu $300 \times 10^{-12}$ $mV^{-2}$ gemessen.

Ein großer Nachteil des Kerr-Effektes in derartigen Systemen ist jedoch die sehr starke Temperaturabhängigkeit des Effektes, wie zum Beispiel für die isotrope Schmelze des Flüssigkristalls 5CB beschrieben wurde (Dunmur D. A. and Tomes A. E . , 1981, Mol. Cryst. Liq. Cryst. 76, 231). In polymerstabilisierten isotropen Flüssigkristallen konnte die Temperaturabhängigkeit verringert werden, jedoch nur für einen stark eingeschränkten Temperaturbereich (J. Phys. D: Appl. Phys. 42 (2009) 112002 / DOI: 10.1088/0022-3727/42/11/112002). Bei der Mehrzahl dieser Systeme erweisen sich die erforderlichen hohen Spannung und lange Schaltzeiten als ungünstig.

Um auf dem Gebiet der optischen Nachrichtenübertragung bzw. Kommunikation verbesserte elektro-optische Elemente in Kombination mit planaren Wellenleitern oder Lichtleitfasern zu schaffen, die bei Anwendungen geeignet ist, welche eine Modulation, Dämpfung, Polarisationssteuerung und ein Schalten von optischen Signalen erfordern, ist aus der WO 2004/046796-A1 eine Wellenleitervorrichtung bekannt, die einen optischen Wellenleiterkern und eine Plattierung umfasst, welche optisch an den optischen Wellenleiterkern gekoppelt ist. Die Plattierung umfasst eine optisch funktionelle Zone mit einem Kerr-Effektmedium mit Definierung eines Brechungsindex, der so ausgebildet ist, dass er im Ansprechen auf ein Steuersignal variiert, welches an die optisch funktionelle Zone angelegt wird. Der Brechungsindex der optisch funktionellen Zone ist niedriger als der Brechungsindex des optischen Wellenleiterkernes bei der optischen Wellenlänge und der Temperatur gemäß dem Betrieb der Vorrichtung. Die Plattierung umfasst eine optisch funktionelle Zone, die durch ein ungepoltes im Wesentlichen isotropes oder im Wesentlichen anisotropes polymeres Plattierungsmedium definiert ist. Insbesondere ist das Plattierungsmedium eine polymere/chromophore Auskleidung, die durch eine chromophore Mobilität gekennzeichnet ist, welche ausreichend ist, um die optisch funktionelle Zone dazu zu befähigen, einen passiven Übergang zu erfahren und zwar von einem im wesentlichen orientierten Zustand in einen im wesentlichen isotropen Zustand in weniger als etwa einer Sekunde. Im Einzelnen enthält die polymere/chromophore Auskleidung wenigstens etwa 5 Gew.-% und etwa 20 Gew.-% an Chromophor und ist plastifiziert und das Kerr-Effekt-Medium enthält ein Polymer, ausgewählt aus Polycarbonat, Terpolymer, PMMA und Polyzyclohexan. Vorzugsweise weist das Chromophor eine Donor-Komponente, eine Überbrückungskomponente mit einer konjugierten und/oder aromatischen Komponente und eine Akzeptor- Komponente auf. Im Einzelnen werden hierzu 12 verschiedene Strukturformeln des Kerr-Effekt-Mediums angegeben. Weiterhin ist ein Controller vorgesehen, der so konfiguriert ist, dass dieser die Betriebstemperatur der Wellenleitervorrichtung steuert oder regelt. Das polymere Plattierungsmedium oder Auskleidungsmedium ist gekennzeichnet durch eine effektive Glas-Übergangstemperatur, die niedriger liegt als die Betriebstemperatur der Vorrichtung. Dabei ist zu berücksichtigen, dass die effektive Glasübergangstemperatur eines Materials die Temperatur ist, bei der die Reorientierungsmobilität des Chromophors eine relativ große Zunahme als Funktion der Temperatur des Materials zeigt. Die effektive Glasübergangstemperatur eines elektrooptischen Materials kann anhand von Messungen des elektrooptischen Ansprechverhaltens des Materials als eine Funktion von dessen Temperatur bestimmt werden. Das Plattierungsmedium weist einen akzeptablen Grad an chromophorer Mobilität und physikalischer Stabilität auf, indem entweder ein Plastifizierungsagens in das Plattierungsmedium inkorporiert oder indem sicherstellt ist, dass die effektive Glasübergangstemperatur des Plattierungsmediums niedriger liegt als die Betriebstemperatur der Vorrichtung. Im Detail sind die Plattierungsmedien der WO 2004/046796 gekennzeichnet durch effektive Glasübergangstemperaturen unterhalb von ca. 120°C bis herab auf 20°C. Um eine ausreichende chromophore Mobilität zu erreichen ist ein Lösungsmittel in dem Plattierungsmedium vorgesehen. In einem Fall eines polymeren Plattierungsmediums, welches einen Chromophor und ein Basis-Polymer enthält, lösen geeignete Lösungsmittel sowohl das Chromophor als auch das Polymer auf. In vielen Fällen führt die Verwendung solcher Lösungsmittel zu geeigneten Betriebstemperaturen der Vorrichtungen bei oder nahe der Raumtemperatur. Mit Hilfe von Steuerelektroden wird in der optisch funktionellen Zone der Plattierung ein elektrisches Feld E erzeugt. Alternativ kann das Steuersignal ein thermisches Signal bewirken, wobei die optisch funktionelle Zone der Plattierung auf die Größe des thermischen Signals anspricht. In jedem Fall weist die Wellenleitervorrichtung einen geeigneten Controller auf, der so konfiguriert ist, um die optischen Eigenschaften von optisch funktionellen Abschnitten der optisch funktionellen Zone unabhängig voneinander zu ändern. Insbesondere induziert das Anlegen einer Steuerspannung an eine elektrooptische Polymer-Plattierung oder -Beschichtung auch sukzessive Phasenverschiebungen $\Delta\phi$ in dem optischen Signal, es werden jedoch sukzessive Phasenverschiebungen mit gleichem Wert induziert und zwar mit progressiv kleineren Erhöhungen in der Steuerspannung V (E ungefähr $\sin^2 \phi$, worin gilt $\phi = BV^2$ ist). Daher nimmt im Falle der sukzessiven Phasenverschiebungen $\Delta\phi$ von 180° die Größe der sukzessiven Steuerspannungsinkremente $V\pi$, die zum Indizieren von sukzessiven Phasenverschiebungen von 180° erforderlich sind, ab und zwar mit Zunahme der Größe der Steuerspannung V. Um ein Mach-Zehnder-Interferometer (d.h. ein Strahlteiler mit zwei Armen zur Messung von Phasenverschiebungen oder zur Modulation von Licht durch gezielte Phasenmodulation in einem Arm des Interferometers bzw. zum wellenlängenabhängigen Demultiplexen) über eine 180°-Phasenverschiebung zu betreiben, werden bei der Wellenleitervorrichtung der WO 2004/046796-A1 etwa 340 Volt benötigt. Die nächste 180°-Phasenverschiebung bei etwa 520 Volt, wird jedoch durch lediglich Erhöhen der Treiberspannung um etwa 180 Volt erreicht (die Differenz zwischen 520 Volt und 340 Volt). Eine dritte 180°-Phasenverschiebung tritt bei etwa 610 Volt auf, einer Zunahme von lediglich etwa 90 Volt. Eine einfache Extrapolation führt zu dem Vorschlag, dass mit einer Vorspannung von etwa 3000 Volt, eine $V\pi$ - Treiberspannung von etwa 4 Volt erreicht werden kann. Durch Verbesserungen des polymeren Plattierungsmediums oder Beschichtungsmediums und Verfeinerung der Elektrodenkonfiguration, die als Steuerelektroden verwendet wird, kann eine 180°-Phasenverschiebung erreicht werden kann und zwar mit Treiberspannungen von weniger als 5 Volt mit einer Vorspannung von etwa 1000 Volt.

Eine weitere technische Anwendung des elektro-optischen Kerr- oder Pockels-Effekts auf dem Gebiet der optischen Nachrichtenübertragung bzw. Kommunikation sind Gitter mit elektrisch einstellbarem Brechungsindex und elektrisch einstellbarer räumlicher Periodizität als Eingangs/Ausgangskoppler, Wellenleiter- Kopplungselement (-Interface), Modus-/Polarisations-Umwandler, Modus-/Polarisations-Filter, Ablenker bzw. Deflektoren, Reflektoren. Hierzu ist aus der EP 1 155 355 B1 ein Beugungsgitter mit einem elektrisch einstellbaren Brechungsindex und einer elektrisch einstellbaren räumlichen Frequenz bekannt, wobei das Gitter umfasst:

- ein Substrat;
- eine elektro-optische Struktur, die sich über das Substrat erstreckt, wobei die elektro-optische Struktur einen Wellenleiter mit einer Ausbreitungsachse umfasst;
- eine erste und eine zweite Elektrodenstruktur zum Erzeugen eines elektrischen Feldes dazwischen, wobei das elektrische Feld das Beugungsgitter in dem Wellenleiter induziert, wobei die erste und zweite Elektrodenstruktur auf gegenüberliegenden Seiten der elektro-optischen Struktur angeordnet sind und jede sich in einer Ebene parallel zu der Ausbreitungsachse des Wellenleiters erstreckt, wobei die erste Elektrodenstruktur einen ersten und einen zweiten Satz gefingert angeordneter Finger umfasst, wobei der erste Satz Finger unter einem Potential $V_0$ steht und der zweite Satz Finger unter einem Potential $V_0$ +¢ V steht, wobei $V_0$ zum Einstellen des Brechungsindexes des Beugungsgitters variabel ist und zum Schalten der räumlichen Periodizität des Gitters zwischen diskreten Werten variabel ist.

Alternativ umfasst zum Verändern von extern darauf einfallendem Licht das Beugungsgitter:

- ein Substrat;
- eine elektro-optische Struktur, die sich über das Substrat erstreckt;
- eine erste und eine zweite Elektrodenstruktur zum Erzeugen eines elektrischen Feldes dazwischen, wobei das elektrische Feld das Beugungsgitter in der elektrooptischen Struktur induziert, wobei die erste und zweite Elektrodenstruktur sich entlang übereinander angeordneter Ebenen parallel zueinander und zu der elektro-optischen Struktur erstrecken und auf gegenüberliegenden Seiten der elektro-optischen Struktur angeordnet sind, wobei die erste Elektrodenstruktur einen ersten und einen zweiten Satz von gefingert angeordneter Fingern umfasst, wobei der erste Satz Finger unter einem Potential $V_0$ ist und der zweite Satz Finger unter einem Potential $V_0$ +¢ V, wobei $V_0$ zum Einstellen des Brechungsindexes des Beugungsgitters variabel ist und zum Schalten der räumlichen Periodizität des Gitters zwischen diskreten Werten variabel ist.

In Einzelnen kann das Beugungsgitter der EP 1 155 355 B1 so ausgebildet sein, dass es als ein Bragg-Filter wirkt oder das Gitter kann zum kollinearen Gegenrichtungskoppeln für eine Reflektorfunktion verwendet werden, wobei es als ein aktiver optischer Filter für verteilte Rückkoppel- (DFB, distributed feedback) bzw. verteilte Braggreflektions- (DBR, distributed Bragg reflection) Laser dient. Andere Ausführungsformen beziehen sich auf Anwendungen in Multiplexsystemen zur Wellenlängenteilung (WDM, wavelength division Multiplexing) für faseroptische Kommunikation. Das Gitter kann alleine oder in Kombination mit anderen elektro-optischen Komponenten zum Bilden integrierter Strukturen eingesetzt werden. Das Gitter umfasst eine elektro-optische Struktur, beispielsweise ein aus einem Material wie $LiNbO_3$ oder einem elektro-optischen Polymer gebildeter, elektro-optischer Stab mit vorzugsweise eine Dicke von annähernd 0,5 bis 2 $\mu$m und eine Breite von etwa 5 $\mu$m, der sich über ein Substrat erstreckt. Erste und zweite Elektrodenstrukturen sind auf gegenüberliegenden Seiten der elektro-optischen Struktur parallel zu der Ausbreitungsrichtung bereitgestellt. Die ersten und zweiten Elektrodenstrukturen mit insbesondere kammähnlicher Form werden verschiedenen Potentialen unterworfen, um dazwischen ein elektrisches Feld und damit die Periodizität aufgrund des resultierenden elektrischen Feldes zu erzeugen. Moderne Herstellungstechnologien im Nanobereich machen gefingerte Elektrodenstrukturen mit Submikronfingerabständen möglich. Die gefingerten Elektroden werden aus einem durchsichtigen leitfähigen Material sowie Indium-Zinn-Oxid (ITO) mit beispielsweise einer Breite a = 105 $\mu$m und ITO Dicke von 0,1 $\mu$m hergestellt. Die Abstände zwischen dem Wellenleiter und den Elektrodenfingern werden mit Pufferschichten aus einem dielektrischen Material, wie $SiO_2$, gefüllt, das einen Brechungsindex niedriger als der Brechungsindex des Wellenleiters aufweist. Diese Pufferschichten bilden die Mantelschicht eines innerhalb des elektrooptischen Stabs gebildeten Wellenleiters und schützen die geführte Welle vor den verlustbehafteten Wechselwirkungen mit den Elektroden.

Weiterhin ist auf dem technischen Gebiet des Stereofernsehens die Ausnutzung des elektro-optischen Kerr-Effekt in Verbindung mit prismatische Brillengläser einer polarisierenden Brille aus der DE 28 28 910-A1 bekannt. Hierzu ist eine Polarisierungsvorrichtung so angeordnet und bemessen, dass sie sich über die gesamte Oberfläche des Bildschirmes eines Fernsehgeräts erstreckt, wobei deren Polarisationsebene zur wahlweisen Ausrichtung auf die Polarisationsebene der linken Linse oder der rechten Linse der polarisierenden Brille des Betrachters drehbar ist. Die Drehung der Polarisationsebene der Polarisierungsvorrichtung wird vorzugsweise durch eine Kerr-Effekt-Zelle erreicht, die aus einem optisch aktiven Material besteht, das die Polarisationsebene des durchgehenden polarisierten Lichtes in Abhängigkeit von einer an entgegengesetzten Elektroden der Zelle von einer Steuerspannungsquelle angelegten Spannung dreht. Dabei ist es möglich, die Rolle der linken oder rechten Linse zu vertauschen, wobei in einem Zustand der Polarisierungsvorrichtung die linke Linse das die Polarisationsvorrichtung durchlaufendes Licht überträgt, während die rechte Linse als Dunkelfilter wirkt, und im anderen Zustand der Vorrichtung die Linsen die Polarisationsvorrichtung durchlaufendes Licht sperren bzw. übertragen. Weiterhin kann nach Wahl des Betrachters die linke Linse oder die rechte Linse so gewählt werden, dass sie als Dunkelfilter wirkt, so dass es möglich ist, das Bild nach Wunsch dem Betrachter näher oder entfernter erscheinen zu lassen. Die Steuerspannungsquelle kann die erwähnte Spannung in Abhängigkeit von einem Befehlssignal liefern, das zusammen mit einem Fernsehsignal (im Falle einer Fernsehsignalwiedergabe) oder in Abhängigkeit von einem auf einem Film aufgezeichneten Signal (im Falle einer Filmwiedergabe) liefern kann. Die Kerr-Effekt-Zelle kann aus PLZT (polykristallinem lanthanum-modifiziertem Bleizirkonattitanat) oder anderen bekannten ferroelektrischen Keramikmaterialien hergestellt sein.

Ein weiterer Anwendungsfall für polarisationsfreie, elektrisch einstellbare bzw. schaltbare optische Linsen sind Sehhilfen und schaltbare Vergrößerungssysteme (Teleskop-Brillen). Klassische Sehhilfen einschließlich bifokaler Systeme werden in zunehmendem Maß mit zusätzlichen Funktionen ausgestattet. Ein ganz wesentlicher Aspekt ist die Entwicklung aktiver, d.h. intelligenter bzw. schaltbarerer oder einstellbarer optischer Systeme. Aktuell wird diese Entwicklung auch durch die Entwicklung von "Head Mounted Displays (HMD) und durch LC Systeme für das sich rasant entwickelnden Feld der "Augmented Reality" beeinflusst (AR ist eine Technologie, bei der Bilder der realen Welt mit Computer generierten Informationen kombiniert werden, so dass Bilder der realen Welt mit virtuellen Informationen ergänzt werden). Grundlage dieser Entwicklung sind LCD-basierte Mikrodisplays. In modifizierter Form kann diese Technologie auch andere Bereiche der Optik revolutionieren und zur Ablösung klassischer refraktiver Elemente wie Linsen, Prismen und anderer passiver Elemente führen.

Unter den beiden Aspekten individualisierbarer bzw. einstellbarer Linsen und erweiterter Funktionalität ist beispielsweise aus der EP 1 463 970 B1 eine binokulare elektronische Brille mit einem Brillengestell bekannt, deren Rahmen als staubdichtes geschlossenes Gehäuse, an welchem die Bügel angelenkt sind, ausgestaltet ist und welche mindestens eine im Gehäuse angeordnete elektronische Videokamera, ein Objektiv, deren Linsen nach vorne schauen, und einen CCD-Sensor aufweist. Im Einzelnen ist ein motorisch verstellbares, frontseitig angeordnetes Linsensystem mit Linsen aus Kunststoff und mit Führungsmittel zur Einstellung durch Verbiegung und/oder Drehung der einzelnen Linsen, welches mit der elektronischen Kamera in Verbindung steht vorgesehen. Mit dem Linsensystem und der Kamera ist eine elektrische Steuereinrichtung verbunden und mit dieser ein Speicher, welcher die manuellen Voreinstellwerte für beiden Augen als Sollwerte zur Anpassung für die automatische Korrektur von Fehlsichtigkeit und Augenabstand während des Betriebs aufweist. Die Korrektur von Sehfehler erfolgt durch Einstellung der Brechkraft der Linsen und/oder Fokussierung einschließlich einer automatischen Einstellung auf Lese- oder Arbeitsdistanz, wobei eine kontrastgesteuerte Fokussierung vorgenommen wird, indem die Steuereinrichtung so ausgelegt ist, dass permanent eine kontrastgesteuerte Fokussierung eingestellt wird. Das Linsensystem besteht aus vier Linsen und der Vergrößerungsbereich liegt zwischen 2,5-fach und 10-fach. Die Steuereinrichtung dient zur Motorensteuerung und zur Erhöhung der Einstellgeschwindigkeit ist an der Abtriebsseite des Motors ein Getriebe angeordnet. Zur Energieversorgung ist im Brillengestell ein Akkumulator angeordnet und am Brillengestell ist eine Anzeige für den Ladezustand des Akkumulators vorgesehen. Weiterhin ist eine mit der Kamera in Verbindung stehende Schnittstellenschaltung für den Anschluss von Aufzeichnungsmitteln vorgesehen. Ferner ist im Bereich der Bügel ein Rundfunkempfänger und/oder ein Rufempfänger angeordnet, welche mit der Anzeige verbunden sind. Vor der ersten Benutzung des Brillensystems stellt der Brillenträger den Augenabstand und bei Fehlsichtigkeit seine Dioptrien-Werte ein. Die Konfigurationen werden im System gespeichert und dienen als Basis für alle weiteren, nun automatisch gesteuerten Prozesse. Bis zur Scharfstellung für das Zoomen zwischen dem Leseabstand von ca. 25cm und der Fokussierung bis ins Unendliche vergehen lediglich Sekunden. Das mechanische Linsensystem ist in der Lage, Objekte auf das 2.4-fache stufenlos heran zu zoomen. Die Objekte werden automatisch scharf abgebildet - unabhängig von der Stufe des Zooms, der sich per Knopfdruck einstellen lässt (in Analogie zur Digitalkamera). Diese Autofokus-Brille funktioniert mit einem mechatronischen Zusammenspiel aus chipgesteuerter Kamera, Motor, und speziellen oberflächenbehandelten Linsen. Weitere Zusatzfunktionen können eine Memory-Taste, Mikrofon, Sprachsteuerung, Lautsprecher im Bügel, externe Akkupacks, Speicher zur Langzeitaufzeichnung von Video und Audio sowie ein Spotlight sein.

Eine wichtige optische Funktion einer solchen Multifunktionsbrille stellt das Vergrößerungssystem dar. Herkömmliche Teleskopbrillen nutzen ein Linsensystem zur Vergrößerung betrachteter Objekte, dass im unteren Bereich der Brille befestigt ist. Kennzeichnend für diese Teleskopbrillen ist das fixierte Vergrößerungssystem, dass nur ein eher eingeschränkter Bereich des gesamten Sichtfeldes nutzen lässt. Generell kommt bei Vergrößerungssystemen je nach Anforderung ein Kepler- oder ein Galileisches System zum Einsatz: Galilei-Systeme gestatten direkt die Realisierung einer aufrechten und seitenrichtigen Vergrößerung, wogegen sich Keplersche Systeme durch größere Sichtfelder auszeichnen. Beim Kepler Teleskop wird jedoch ein spiegelverkehrtes Bild erzeugt, dass ggf. durch zusätzliche optische Elemente (Prisma oder Linse) umgewandelt wird. Ist die Bautiefe des Vergrößerungssystems kritisch, so ist das Galilei-Teleskop vorzuziehen.

Die bisher genutzten Prinzipien zur Entwicklung einstellbarer optischer Elemente, insbesondere von Linsen, basieren auf elastischen Membranen in Kombination mit geeigneten Fluiden, dem Electrowetting-Prinzip von Flüssiglinsen oder auf der elektrisch induzierten Umorientierung von Flüssigkristallen. Bei Elastomer-Membranen wird in eine Kaverne, die durch eine dünne Elastomer-Folie gebildet wird, eine Flüssigkeit gepumpt bzw. diese in ein Reservoir entlassen, um eine Krümmungsänderung der Membran zu bewirken. Membranlinsen können auch in Mikroskop-Systeme integriert werden (siehe Biomed. Opt. Express 5(2), 645-652 (2014) oder Biomed. Opt. Express 5(6), 1877-1885 (2014)). Diese mechanische Lösung weist aber nur moderate Schaltzeiten auf, da die Membran-Kaverne beim Schaltvorgang mit Flüssigkeit gefüllt oder geleert werden muss. Darüber hinaus ist die Stabilität der Elastomer-Membran bei einer hohen Zahl von Schaltzyklen zu prüfen. Außerdem ist die Periphere der Membran-Linsen durch Reservoir, Pumpen und Motoren relativ voluminös. Auf Basis von Membranlinsen wurden auch einstellbare Sehhilfen auf den Markt gebracht, bei denen der Pumpvorgang manuell ausgeführt wird. Derartige Systeme sind naturgemäß sehr langsam.

Eine Alternative zu den Membran-Linsen stellen Flüssiglinsen dar, die auf dem Prinzip des Electrowettings beruhen. Einsatzgebiete dieser steuerbaren optischen Autofokus-Flüssiglinsen sind Smartphones, Webcams und andere Anwendungen.

Der Bereich der tunebaren Brechkraft der Linsen ist recht groß und reicht von -12 bis 12 Dioptrien, die Schaltzeiten sind mit 20ms schnell genug für eine Reihe von Anwendungen, jedoch nicht ausreichend für hohe Taktraten im machine vision Bereich. Für Anwendungen in optischen Fokussierelementen im Bereich machine vision gelten jedoch andere Anforderungen hinsichtlich Apertur, Geschwindigkeit und Auflösung. Stand der Technik zur Fokussierung im industriellen Bereich ist die mechanische Fokussierung der Objektive. Das stößt an seine Grenzen wegen der zu bewegenden Massen (Geschwindigkeit) sowie hinsichtlich der Langzeitstabilität (Verschleiß der mechanischen Elemente). Ein Nachteil dieser Lösung besteht auch darin, dass der spannungslose Zustand optisch nicht neutral ist, sondern eine

Zerstreuungslinse darstellt. Außerdem ist die freie Apertur im Verhältnis zum Gesamtdurchmesser des Linsenelements beschränkt, so dass die ringförmige Versorgungseinheit das Linsenelement dominiert, insbesondere bei Anwendungen am Kopf.

Sowohl Elemente auf Basis des Electrowetting-Prinzips als auch Membran-Linsen sind demnach aufgrund ihrer Bauform mit voluminösen Versorgungseinrichtungen und durch ihr Gewicht für Hybrid-Optiken und auch für Sehhilfen oder Teleskop-Brillen wenig geeignet.

Schaltbare Linsen auf Basis von Flüssigkristallen (LC - Liquid Crystal) zeigen diese Nachteile nicht. Eine schaltbare Bifokalbrille auf Flüssigkristall-Basis basiert in der Regel auf der feldinduzierten Änderung der Orientierung einer dünnen Flüssigkristall-Schicht innerhalb einer klassischen refraktiven Linse. Durch den Brechungsindexkontrast wird im geschalteten Zustand ein zusätzliches Linsenelement aktiviert, das eine scharfe Nahsicht ermöglichen soll. Im ausgeschalteten Zustand ist dieses Linsen-Element nicht aktiv und die scharfe Fernsicht wird von der refraktiven Linse gewährleistet. Die Schaltung zwischen den Zuständen kann manuell oder durch einen Neigungsdetektor erfolgen.

Für die Anwendungen in Webcams oder Kameras in Mobiltelefonen kommt man mit Linsen von nur wenigen Millimetern Durchmesser aus, was das technische Problem sehr vereinfacht. Einschränkungen sind hier die starke Polarisationsabhängigkeit des genutzten Effektes, welcher entweder die Lichtausbeute durch den Einsatz von zusätzlichen Polarisatoren reduziert oder der Aufbau der Elemente wird durch die alternative orthogonale Kombination zweier Elemente deutlich aufwändiger und birgt zusätzliche Fehlerquellen in der Herstellung. Der Vorteil LC basierter Linsen besteht darin, dass mit ihrer Hilfe z.B. Teleskopsysteme oder Fokussiereinrichtungen realisiert werden können, die vollkommen ohne mechanische Elemente auskommen und somit eine robuste und wartungsfreie Optik ermöglichen und außerdem zu einer Reduktion von Bautiefe und Gewicht führen.

Bei refraktiven Linsen ist die mögliche Brechkraft generell durch den Krümmungsradius der Phasengrenze zwischen optisch dichterem und dünnerem Medium und den Brechungsindexhub bestimmt. Ähnliches gilt auch für GRIN-Linsen (Gradienten-Index), als solche sind auch plane Flüssigkristall-Linsen zu betrachten. Hier sind der radiale Brechungsindexhub, vom Zentrum zum Randbereich, in Verbindung mit dem Durchmesser die bestimmenden Größen. Bei allen dieser Linsentypen gilt: Der geforderte Durchmesser der Linse beschränkt die zu erzielende Brechkraft, wenn die Schichtdicke des Mediums konstant bleiben soll. Soll bei einer bestimmten Brechkraft der Durchmesser der Linse erhöht werden, muss auch die Schichtdicke erhöht werden. Dies führt jedoch bei Flüssigkristall-Linsen zu einer quadratischen Zunahme der nötigen Schaltspannungen bei einer gleichzeitigen Abnahme der Schaltgeschwindigkeit.

Diese Beschränkungen lassen sich nur durch Beugungslinsen, bzw. genauer Phasen-Zonenplatten überwinden. Im Gegensatz zu Fresnel-Zonenplatten, die auf einer Amplitudenmodulation beruhen, nutzen Phasen-Zonenplatten eine Phasenverschiebung von der Hälfte der Wellenlänge aus, um die Linsenfunktion zu erzielen. Deswegen ist bei ihnen auch die Lichtausbeute erheblich höher, da das gesamte einfallende Licht genutzt wird, statt wie bei den Amplituden-Zonenplatten nur die Hälfte. Zusätzlich kann durch die Ausführung als Gabor-Hologramm (sinusförmiger statt binärer Übergang der Zonen) die typische Periodizität der Fokuslänge auf eine bestimmte Fokuslänge reduziert werden.

Konventionelle starre optische Elemente aus anorganischen Materialien, wie beispielsweise Linsen aus Glas oder kristalline Strahlteiler, werden zunehmend durch organische Materialien ersetzt. Erstere haben zwar den Vorteil exzellenter optischer Eigenschaften und hoher Stabilität, sind aber voluminös und durch eine aufwendige Herstellungstechnologie gekennzeichnet. Organische Materialien sind wesentlich leichter zu ver- und bearbeiten, insbesondere zu strukturieren (Spritzguss, Drucken, Nanoimprinting, 3D Druck, Laserstrukturierung). Ein weiterer ganz wesentlicher Vorteil besteht darin, dass viele organische Materialien auf externe Stimuli, wie Licht, elektrische Spannung, Temperatur, usw. reagieren und dadurch ihre physikalischen Eigenschaften permanent oder reversibel ändern. Die spannungsinduzierte Umorientierung von Flüssigkristallen in LCDs ist dafür das prominenteste Beispiel für die Nutzung elektrisch schalt- und einstellbarer optischer Elemente auf der Grundlage elektro-optischer Orientierungseffekte von Flüssigkristallen. Spannungsinduzierte Dicken- bzw. Längenänderungen von Elastomeren, nutzbar in Aktoren oder tunebaren Gittern, sind ein weiteres Beispiel. Damit werden aktive optische Systeme bzw. intelligente Systeme möglich, die gezielt einstellbar sind bzw. auf äußere Bedingungen aktiv reagieren.

Das Problem der Polarisationsabhängigkeit hingegen könnte durch spezifische LC-Systeme behoben werden, die makroskopisch in Durchstrahlungsrichtung isotrop sind. Dies trifft z.B. auf PDLC Systeme (Polymer Dispersed Liquid Crystal) oder polymerstabilisierte Flüssigkristalle mit Blauen Phasen (isotrope LC Phase mit komplexer 3D Struktur) zu. Aufgrund von erhöhten Wechselwirkungen mit den Polymerwänden sind jedoch hohe Schaltspannungen erforderlich. Zusätzlich dazu tritt, verursacht durch die Phasenseparation, eine erhöhte Streuung des transmittierten Lichts auf, was die Eignung dieser Basislösungen für abbildende optische Systeme erheblich einschränkt. Intensiv wird auch an Konzepten zur Reduzierung der Schaltzeiten gearbeitet, wobei diese derzeit mit nennenswertem Schalthub im Stand der Technik aber auf den sub-ms-Bereich begrenzt sind.

Die spannungsinduzierte Orientierung polarer Moleküle in Flüssigkeiten ist seit langem als optischer Kerr-Effekt bekannt. Die Kerr-Konstanten konventioneller Flüssigkeiten wie z.B. Nitrobenzen oder Schwefelkohlenstoff sind jedoch für die Anwendung in Linsen um Größenordnungen zu niedrig und die Schaltspannung um Größenordnung zu hoch.

Deutlich höherer Kerr-Konstanten werden in isotropen Flüssigkristallen beobachtet. Die Schaltzeiten liegen im

einstelligen ms-Bereich oder darunter. Einige dieser Probleme flüssigkristalliner Systeme und konventioneller Kerr-Flüssigkeiten können durch Flüssigkristalle in ihrer isotropen Phase oberhalb des Klärpunkts überwunden werden. Dabei werden Vororientierungseffekte der Flüssigkristalle in isotropen Schmelzen kurz oberhalb des Klärpunktes ausgenutzt. Dies führt zu polarisationsfreien, schnell schaltenden und genügend effizienten Kerr-Systemen. Ein ganz wesentlicher Nachteil ist jedoch die extrem starke Temperaturabhängigkeit des Effektes. Zusammenfassend weisen alle Varianten auf Basis des Electrowetting-Prinzips, der LC-Orientierung oder der Membranfluidik in den optischen oder geometrischen Parametern mitunter erhebliche Einschränkungen auf.

YANG YOUNG-CHEOL ET AL: "Electro-optic Kerr effect in polymer-stabilized isotropic liquid crystals",APPLIED PHYSICS LETTERS, A I P PUBLISHING LLC, US, Bd. 98, Nr. 2, 13. Januar 2011 (2011-01-13), Seiten 23502-23502, offenbart einen elektrisch steuerbaren optischen Element, gemäß dem Oberbegriff des Patentanspruchs 1.

Wie die vorstehende Würdigung des Standes der Technik aufzeigt, sind unterschiedlich ausgestaltete Vorrichtungen unter Ausnutzung des elektro-optischen Kerr-Effekts, insbesondere zur Modulation des Lichtes bekannt. Für eine breite industrielle Anwendung ist die sehr starke Temperaturabhängigkeit des Effektes in Verbindung mit hohen Betriebsspannungen nachteilig.

Der Erfindung liegt die Aufgabe zugrunde, ein elektrisch steuerbares optisches Element derart auszugestalten bzw. herzustellen, dass basierend auf dem elektrooptischen Kerr-Effekt eine niedrige Schwellen- und Betriebsspannung, eine minimierte Temperaturabhängigkeit des Effektes und eine niedrige Ansprechzeit erreicht wird.

Diese Aufgabe wird bei einem elektrisch steuerbaren optischen Element, gemäß dem Oberbegriff des Patentanspruchs 1, dadurch gelöst, dass die Kerrflüssigkeit eine Mischung aus stäbchenförmigen und nicht stäbchenförmigen Molekülen als aktive Komposite aufweist und dass die Kerrflüssigkeit eine dünne Schicht mit einem vorprägbaren, weitmaschigen, anisotropen Netzwerk zwischen auf einem Substrat aufgebrachten strukturierten oder / und flächigen leitfähigen Schicht in einer Dünnschichtzelle ausbildet, derart, dass entsprechend dem elektro-optischen Kerr-Effekt der Zustand der aktiven Komposite der Kerrflüssigkeit ohne elektrisches Feld im Arbeitstemperaturbereich RT isotrop ist und durch elektrisch kontinuierliche Einstellung der Spannung U oder durch Ein-/Ausschalten der Spannung U eine Veränderung des spannungsinduzierten Phasenhubs oder Brechungsindexhubes des optischen Elements erzeugt wird und das Licht einen Elektrodenzwischenraum senkrecht zu den Elektroden durchtritt.

Weiterhin wird diese Aufgabe bei einem Verfahren zur Herstellung eines elektrisch steuerbaren optischen Element gemäß dem Oberbegriff des Patentanspruchs 9, dadurch gelöst, dass

a) die Kerrflüssigkeit eine Mischung aus stäbchenförmigen und nicht stäbchenförmigen Molekülen als aktive Komposite, reaktive Mesogene, Photoinitiatoren und aliphatische Monomere aufweist,
b) die Kerrflüssigkeit in eine als Dünnschichtzelle ausgestaltete Kerrzelle gefüllt wird,
c) die Kerrflüssigkeit auf eine tiefere Temperatur T als Raumtemperatur RT abgekühlt wird, bei der sich eine LC-Phase mit einer homöotropen Orientierung ausbildet, und
d) durch eine UV-Bestrahlung der homöotrop orientierten Schichten Radikale erzeugt werden, die eine Polymerisation der orientierten reaktiven Semi-Mesogene bewirken, derart, dass ein weitmaschiges, loses anisotropes Netzwerk aus mit den aliphatischen Monomeren vernetzten Mesogenen in der Kerrflüssigkeit entsteht,

so dass ohne Spannung U im Arbeitstemperaturbereich RT das Komposit aus stäbchenförmigen Molekülen mit großem Dipolmoment und nicht-stäbchenförmigen, dipolare Molekülen wieder isotrop ist und bei Anlegen der Spannung U sich die Moleküle des Komposits in Richtung der E-Feldlinien orientieren.

Bei der vorliegenden Erfindung wird der elektro-optische Kerr-Effekt (siehe auch das Internet-Lexikon Wikipedia, https://de.wikipedia.org/wiki/Kerr-Effekt) in isotropen Flüssigkeiten genutzt. Demnach handelt es sich nicht um flüssigkristalline Zustände. Insbesondere wird beim erfindungsgemäßen optischen Element eine Verstärkung des optischen Kerr-Effekts durch Selbstorganisation auf der Basis eines vorprägbaren, weitmaschigen, losen anisotropen Netzwerks bewirkt. Somit können auf überraschende Art und Weise durch die Verwendung der erfindungsgemäßen Komposite und die erfindungsgemäße Herstellungstechnologie, die zu spezifischen Zellkonfigurationen in der erfindungsgemäßen Dünnschichtzelle führt, behoben werden. Der Zustand der erfindungsgemäßen aktiven Komposite ist ohne elektrisches Feld im Arbeitstemperaturbereich isotrop. Es existieren keine Domänen oder Mikrodomänen von geordneten Molekülen, die zur Streuung führen könnten. Insbesondere werden fixierte Mesogen-Cluster erzeugt, die ebenfalls Bestandteil einer Precursor-Mischung (d.h. als Ausgangsstoffe für weiteren Syntheseschritt) sind. Sie erhöhen den Kerr-Effekt und minimieren die Temperaturabhängigkeit des Effektes. Das gesamte Komposit verbleibt im flüssigen, isotropen Zustand.

Die darauf basierenden erfindungsgemäßen optischen Dünnschichtelemente sind elektrisch kontinuierlich einstellbar oder alternativ zwischen definierten Zuständen schaltbare Phasenmodulatoren, Linsen und Sehhilfen. Sie sind dadurch gekennzeichnet, dass sie optisch isotrop sind, d.h. dass sie polarisationsfrei und nicht-streuend sind. Sie werden mit elektro-optisch aktiven Kompositen realisiert, die sich in Transmissionsrichtung polarisationsfrei anwenden lassen und sind durch einen hohen elektrisch induzierbare Phasenhub und / oder Brechungsindexhub gekennzeichnet. Insbesondere für den Anwendungsfall Sehhilfen liegt der Betriebsspannungsbereich der Gleichspannung U zwischen 15V

und 40V, vorzugsweise zwischen 25V bis 30V.

Mittels dem erfindungsgemäßen Verfahren werden polarisationsfreie, elektrisch schaltbare optische Elemente auf Basis von Dünnschichtzellen mit neuartigen elektro-aktiven Flüssigkeiten hergestellt, deren Orientierung durch die Wechselwirkung polarer, stäbchenförmiger Moleküle in anisotropen Polymernetzwerken verstärkt wird. Durch Moleküldesign und Verstärkung des Kerr-Effekts infolge Selbstorganisation werden deutlich höhere Brechzahlmodulationen bzw. Phasenhübe bei kurzen Schaltzeiten und geringer Spannung erreicht. Beispiele für elektrisch schaltbare bzw. einstellbare Linsen, insbesondere für Sehhilfen sind:

a) elektrisch schnell schaltbare optische Einzelelemente für Sehhilfen
b) tunebare, individuell einstellbare Sehhilfen
c) schaltbares Vergrößerungssystem für Teleskop-Brillen

In Weiterbildung der Erfindung weist, gemäß Patentanspruch 2, die Dünnschichtzelle zwei Glas- oder Polymersubstrate auf, deren innere Oberfläche jeweils mit einer leitfähigen ITO-Elektrode als leitfähige Schicht und auf dieser mit einer Orientierungsschicht versehen ist und dass das Vorprägen für ein weitmaschiges, anisotropes Polymernetzwerk mittels in die abgekühlte Kerrflüssigkeit beigemischten Photoinitiatoren, aliphatischen Monomeren und reaktiven Semi-Mesogenen, Ausrichten der stäbchenförmiger Moleküle durch Anlegen einer Spannung U und UV-Bestrahlung der Kerrflüssigkeit erfolgt.

Diese Weiterbildung der Erfindung weist den Vorteil auf, dass auf überraschende Art und Weise in etwa eine Hälfte des Molekülgerüstes mesogen ausgestaltet werden kann und durch ausgeprägte Wechselwirkungen mit den Semi-Mesogenen der Komposite gekennzeichnet ist und ca. die andere Hälfte des Molekülgerüstes nicht-mesogen ist, wobei die Abweichung von der stäbchenförmigen Struktur nicht die Stärke der dielektrischen Anisotropie herabsetzt.

Bei einer bevorzugten Ausgestaltung der Erfindung enthält, gemäß Patentanspruch 3, die zu einer homöotropen Orientierung führende Orientierungsschicht photovernetzbare bzw. photopolymersierbare Gruppen und das anisotrope Netzwerk ist kovalent an die beiden Substratgrenzflächen fixiert, wodurch das Netzwerk in seiner anisotropen Form auch bei der Isotropisierung der Kerrflüssigkeit durch Temperaturerhöhung in den Arbeitsbereich annähernd Raumtemperatur RT erhalten bleibt.

Diese Ausgestaltung der Erfindung weist den Vorteil auf, dass auf überraschende Art und Weise die Wirkung der Aligninglayer eine homöotrope Orientierung aus (d.h. die Moleküle richten sich senkrecht zu den Substraten aus) verstärkt und das Netzwerk in der Dünnschichtzelle an die beiden Substratgrenzflächen fixiert ist.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:

| | |
|---|---|
| FIG. 1 | eine bevorzugte Ausführungsform des elektrisch steuerbaren optische Elements, links im Ausgangszustand rechts nach Vorprägung, |
| FIG. 2 | das optische Element nach FIG. 1 bei annähernder Raumtemperatur RT, links ohne Beaufschlagung mit Spannung U und rechts nach Anlegen der Spannung U, |
| FIG. 3 | die Zusammensetzung der isotropen Kerr-Komposite, |
| FIG. 4 | die Architektur einer bevorzugten Ausführungsform der Semi-Mesogene und |
| FIG. 5a, 5b | eine Ausführungsform für ein mehrdimensionales, anisotropes Netzwerk. |

Die FIG. 1 bis FIG. 2 zeigen eine bevorzugte Ausführungsform des elektrisch steuerbaren optischen Elements, insbesondere zur Verdeutlichung des erfindungsgemäßen Kerr-Effekts isotroper Komposite einer Kerrflüssigkeit K auf Basis von Mischungen stäbchenförmiger Moleküle 5 und nicht stäbchenförmiger Moleküle 4 in anisotropen Netzwerken 9. Dabei ist im Folgenden unter Flüssigkristall + Semi-Mesogen eine isotrope Mischung, unter Isotrope Mischung + Reaktivemesogene + aliphatische Monomere + Photoinitiator + etc. eine Precursor-Mischung und unter Precursor-Mischung + UV-Bestrahlung ein (erfindungsgemäßes) Komposit zu verstehen, wie dies in FIG. 3 dargestellt ist.

Die erfindungsgemäßen Komposite 4, 5 der Kerrflüssigkeit K sind durch eine geeignete Kombination von stäbchenförmigen Molekülen 5 mit großem Dipolmoment, sowie nicht-stäbchenförmige, dipolare Molekülen 4, welche die Ausbildung geordneter Zustände wie z.B. von Flüssigkristall-Phasen verhindern, photovernetzbare mono-, bi- und trifunktionale Moleküle, insbesondere reaktive Mesogene 8, und Photoinitiatoren 6 gekennzeichnet. Photoinitiatoren sind chemische Verbindungen, die nach Absorption von (UV-) Licht in einer Photolysereaktion zerfallen und so reaktive Spezies bilden, die eine Reaktion starten (initiieren); im Rahmen der erfindungsgemäßen Kerrflüssigkeit K eine Polymerisation. Bei den reaktiven Spezies handelt es sich um Radikale oder um Kationen. Wobei weitere Bestandteile, wie Moleküle mit nicht-kovalenten Wechselwirkungen und fixierte Mesogen-Cluster die erwünschten Eigenschaften deutlich verbessern.

Die nicht-stäbchenförmigen dipolaren Moleküle (Semimesogene) 4 unterdrücken die Ausbildung einer flüssigkristallinen Phase bei Raumtemperatur bzw. im Arbeitstemperaturbereich RT. Ihre Funktion besteht im Bewirken einer

Klärpunktsdepression der Flüssigkristall-Phasen der stäbchenförmigen Moleküle 5. Eine derartige ausbalancierte Klärpunktsdepression kann beispielsweise durch voluminöse Flügelgruppen, laterale Substituenten, durch ein kleineres Länge/Breite-Verhältnis, durch Abweichungen von der stäbchenförmigen Struktur u.a. erreicht werden.

Andererseits ist die molekulare Gestalt der Semimesogene 4, ihre molekularen Wechselwirkungen und ihre Konzentration so ausgelegt, dass sie bei tiefen Temperaturen unterhalb des Arbeitstemperaturbereiches (T<RT) die Ausbildung einer homöotropen Orientierung der Mischung erlauben. Eine Hälfte des Molekülgerüstes ist also Semi-Mesogen und durch ausgeprägte Wechselwirkungen mit den Mesogenen der Komposite gekennzeichnet und die andere ist nicht-mesogen, wobei die Abweichung von der stäbchenförmigen Struktur nicht die Stärke der dielektrischen Anisotropie herabsetzt. Diese Moleküle sind aber auch durch ein möglichst hohes Dipolmoment gekennzeichnet, wodurch sie zur Stärke des Kerr-Effektes des Komposits beitragen.

Durch eine UV-Bestrahlung (vorzugsweise mit UV-Leistungsdioden) der homöotrop orientierten Schichten werden Radikale erzeugt, die eine Polymerisation der orientierten reaktiven Mesogene 8 bewirken. Es resultiert ein weitmaschiges, loses anisotropes Netzwerk 9. Bei Raumtemperatur bzw. im Arbeitstemperaturbereich RT wird das Komposit aus stäbchenförmigen Molekülen mit großem Dipolmoment und nicht-stäbchenförmigen, dipolare Molekülen wieder isotrop. Legt man eine Spannung U an, so orientieren sich die Moleküle des Komposits 4, 5 in Richtung der E-Feldlinien (homöotrop, d.h. senkrecht zu den Substratflächen) (siehe FIG.1 links).

In einer Ausführung enthält ein zur homöotropen Orientierung führende Aligninglayer/Orientierungsschicht 3, photovernetzbare bzw. photopolymersierbare Gruppen. In diesem Fall wird das anisotrope Netzwerk 9 kovalent an die beiden Substratgrenzflächen fixiert, wodurch das Netzwerk in besonderem Maße in seiner anisotropen Form auch bei der Isotropisierung des Komposits 4, 5 durch Temperaturerhöhung in den Arbeitsbereich (annähernd Raumtemperatur) RT erhalten bleibt.

Die Polymer-basierte anisotrope Matrix bzw. das anisotropes Netzwerk 9 dient zur Unterstützung des elektrisch bewirkten Schaltzustandes und senkt die Schaltspannung. Sie wird durch ein spezielles Verfahren in der Precursor-Mischung 4, 5 des aktiven Materials erzeugt. Durch die Erzeugung des assistierenden Netzwerkes 9 wird keine makroskopisch wahrnehmbare Phasenseparation hervorgerufen, wie dies bei polymerstabilisierten Blauen Phasen, polymerstabilisierten isotropen Phasen und isotropen polymerdispersen Phasen der Fall ist.

Das weitmaschige, anisotrope Polymernetzwerk 9 mit seiner Orientierungsfunktion (Bulk-Alignment, Orientierungsschicht 3) bewirkt eine bessere Temperaturkonstanz, geringe Schaltspannungen und eine Verstärkung des optischen Kerr-Effekts durch Selbstorganisation.

Im Extremfall bildet sich bei Anlegen einer genügend hohen Spannung U und geeigneter zwischenmolekularer Wechselwirkungen der genau abgestimmten Zusammensetzung des Komposits 4, 5 und nur hierdurch, eine flüssigkristalline Phase aus.

Um eine geringere Temperaturabhängigkeit durch Stabilisierung infolge Fixierung der Ordnung in der Kerrflüssigkeit K zu erhalten, kann der Kerr-Effekt isotroper Komposite mit nanoskaligen Clustern und Nanopartikeln formanisotroper Molekülen mit großem Dipolmoment im weitmaschigen anisotropen Polymernetzwerk 9 erreicht werden. Hierzu werden nanoskopische Cluster und Nanopartikel formanisotroper Moleküle 4, die durch kovalente Bindungen oder zwischenmolekulare Wechselwirkungen in ihrer geordneten Anordnung fixiert werden, als Bestandteil der Precursor-Mischung 4, 5 eingesetzt. Derartige nanoskalige anisotrope Cluster und Nanopartikel erweitern den vorstehenden Ansatz des Kerr-Effekt isotroper Komposite auf Basis von Mischungen stäbchenförmiger und nicht stäbchenförmiger Moleküle 4, 5 in anisotropen Netzwerken 9. Der Unterschied besteht darin, dass die stäbchenförmigen Moleküle mit großem Dipolmoment 5 in Form nanoskaliger Cluster oder Nanopartikel in geordneter Anordnung fixiert vorliegen (analog zu Vorordnungseffekt von Schwärmen dicht oberhalb des Klärpunkts nematischer Phase). Derartige Cluster und Nanopartikel sind nanoskopisch klein (1nm bis 200nm, bevorzugt 5 bis 20nm). Auf Grund der nanoskopischen Größe bewirken sie keine Streuung des Komposits. Stäbchenförmige Moleküle mit reaktiven Gruppen (reaktive Mesogene) 5 können durch Photopolymerisation in gebildeten Droplets, Nanopartikeln oder nematischen Vorordnungsschwärmen dicht oberhalb des Klärpunkts fixiert werden. Anstelle einer Fixierung durch kovalente Bindungen kann dies auch durch nicht-kovalente zwischenmolekulare Wechselwirkungen (H-Brückenbindungen, ionische Wechselwirkungen und $\pi\pi$-Wechselwirkungen) erfolgen, dies führt ebenfalls zu stabileren geordneten nanoskopischen Molekülanordnungen. Derartige Molekül-Cluster bzw. sphärische und asphärische Nanopartikeln werden in der Precursor-Mischung 4, 5 dispergiert. Die resultierenden Kompositen sind isotrope, nicht streuende Flüssigkeiten.

Geordnet fixierte Cluster und Nanopartikel auf Basis formanisotroper Moleküle bewirken einerseits eine Erhöhung des Kerr-Effekts durch ihre hohe stabile Orientierungsordnung und minimieren insbesondere die ausgeprägte Temperaturabhängigkeit des Kerr-Effekts in Lösungen oder LC Materialien oberhalb des Klärpunktes.

Um eine geringere Temperaturabhängigkeit durch unterschiedliche Temperaturabhängigkeit von zwischenmolekularer Komplexbildung und Vorordnungseffekt in der Kerrflüssigkeit K zu erhalten, kann der Kerr-Effekt isotroper Komposite auf Basis der Komplexbildung entstehender formanisotroper Moleküle 5 mit großem Dipolmoment durch zwischenmolekulare Wechselwirkungen im weitmaschigen anisotropen Polymernetzwerk 9 erreicht werden. Hierzu werden die stäbchenförmigen Moleküle 5 mit großem Dipolmoment erst durch zwischenmolekulare Wechselwirkungen

wie beispielsweise von H-Brückenbindungen, ionische Wechselwirkungen und ππ-Wechselwirkungen (wie z.B. Pyridin/Säure, Säure/Säure o.a.) gebildet. Die unterschiedlichen Temperaturabhängig von zwischenmolekularen Wechselwirkungen und von Vororientierungseffekt wird zur Stabilisierung des Effektes genutzt. Die Ordnungstendenz der stäbchenförmigen Moleküle 5 wird - entsprechend dem vorstehenden Ansatz des Kerr-Effekt isotroper Komposite auf Basis von Mischungen stäbchenförmiger und nicht stäbchenförmiger Moleküle 4, 5 - so durch nicht-kovalente zwischenmolekulare Wechselwirkungen erhöht. Demgemäß wird ein Spannungs-induzierter Ordnungs- bzw. Verstärkungseffekt durch Selbstorganisation bewirkt, der zu hohen Kerr-Konstanten führt.

Um eine geringere Temperaturabhängigkeit durch unterschiedliche Temperaturabhängigkeit von zwischenmolekularer Komplexbildung und Vorordnungseffekt in der Kerrflüssigkeit K zu erhalten, kann die thermische Stabilisierung des Kerr-Effekts isotroper Komposite mit nicht-formanisotropen Molekülen, die durch zwischenmolekulare Wechselwirkungen gebildet werden, erreicht werden. Dabei werden die nicht-stäbchenförmigen Semimesogene 4 erst durch zwischenmolekulare Wechselwirkungen, wie beispielsweise von H-Brückenbindungen oder ionische oder ππ-Wechselwirkungen, gebildet. Durch die Bildung der Semimesogene 4 wird bei Raumtemperatur bzw. im Arbeitstemperaturbereich RT eine isotrope Phase generiert. Eine Temperaturerhöhung führt zur Schwächung der nicht-kovalenten Wechselwirkungen und die Komplexe werden (teilweise abgebaut). Auf diese Weise wird deren Konzentration geringer und so eine Steuerung der Ordnungstendenz möglich. Der thermisch induzierte Abbau der Komplexe, d.h. die verminderte Ausbildung von z.B. H-Brückenbindungen heben die Verwischung der Ladung, die durch die Komplexbildung bewirkt wird, auf und die Fragmente erhalten ein höheres Dipolmoment. Auf diese Weise erhält das Komposit mit Erhöhung der Temperatur eine höhere dielektrische Anisotropie und der Kerr-Effekt wird unterstützt.

Unter Nutzung der erfindungsgemäßen aktiven Komposite 4, 5 und deren Anwendung in dünnen Schichten zwischen strukturierten oder / und flächigen Elektroden 2 kann eine Vielfalt von Anwendungen realisiert werden:

- Refraktive und diffraktive optische Elemente,
- Elektrisch kontinuierlich einstellbare oder zwischen zwei Zuständen schaltbare Linse,
- Elektrisch kontinuierlich einstellbare und lokal modifizierbare Linse (Korrekturlinse, asphärische Linsen),
- Lokal und im Effekt kontinuierlich einstellbare Sehhilfe oder zwischen zwei Zuständen schaltbare Sehhilfe (Zuschaltbarer Nahsichtteil),
- Elektrisch steuerbare Beugungsgitter,
- Polarisationsunabhängige Phasenmodulatoren.

Nachfolgend wird der Aufbau des erfindungsgemäßen elektrisch steuerbaren optischen Elements im Detail unter Bezugnahme auf FIG. 1 und FIG. 2 beschrieben.

Zellsubstrate 1:

Die Zellsubstrate können aus Glas oder Kunststoff sein. Die Substrate können plan oder konkav oder konvex sein oder auch Mikrolinsen aufweisen. Die Substrate 1 werden durch Spacer (Glas- oder Kunststofffaserstücke oder Kügelchen oder lithographisch erzeugte Polymerstrukturen) in einem gleichmäßigen Abstand von einigen μm gehalten. Durch Optikkleber werden die beiden Substrate 1 an den Stirnflächen zueinander fixiert.

Elektroden 2:

Die Glas- oder Kunststoffsubstrate 1 werden mit transparenten Elektroden 2 versehen. Dies sind vorzugsweise Elektroden aus ITO, Metallen bzw. leitfähigen Polymeren, die durch Sputtern, Aufdampfen, Drucken u.a. auf die Substrate 1 aufgebracht werden Die Elektroden 2 können großflächig oder strukturiert sein, wobei die Strukturierung durch Drucken, mittels Masken beim Aufbringen der Elektroden erfolgen kann. Alternativ können im Rahmen der Erfindung großflächige Elektroden strukturiert werden.

Orientierungsschichten/Aligninglayer 3:

Auf die ITO Elektroden 2 werden dünne Schichten von Aligninglayern 3 (20nm bis 1μm) aufgebracht, die die homöotrope Orientierung des Komposits bei tiefen Temperaturen bzw. unterhalb des Arbeitstemperaturbereichs bewirken (T<RT). Dafür werden dafür im Rahmen der Erfindung Polymere wie Polyimide, Polyvinylalkohol, photosensitive Polymere, Lecithin u.a. eingesetzt.

Optional enthalten die Aligninglayer 3 (photo-)vernetzbare Gruppen, die die kovalente Anbindung der reaktiven Mesogene bzw. daraus gebildeter Netzwerke 9 gestatten.

Komposit 4, 5:

Das Komposit ist im Arbeitsbereich annähernd Raumtemperatur RT isotrop. Ein anisotroper Zustand wird durch Grenzflächenorientierung mit Hilfe von Orientierungsschichten bei tiefen Temperaturen erreicht. Dieser anisotrope Zwischenzustand ist ausschließlich für die Herstellung des anisotropen Netzwerkes 9 durch Photopolymerisation der reaktiven Mesogene 5 erforderlich. Im Arbeitstemperaturbereich RT wird dann wieder der isotrope Zustand der polaren, stäbchenförmigen und nicht-stäbchenförmig Moleküle 4, 5 erreicht.

Zustände während der Herstellung und bei Betrieb des erfindungsgemäßen elektrisch steuerbaren optischen Elements sind:

1. Isotroper Ausgangszustand der Komposit-Mischung 4, 5 zwischen den Substraten 1 bei Raumtemperatur RT.
2. Homöotroper Zustand bei tiefen Temperaturen vor der Photopolymerisation (siehe FIG. 1 links).
3. Homöotroper Zustand mit durch Photopolymerisation bei tiefen Temperaturen erzeugtem anisotropen Netzwerk (siehe FIG. 1 rechts).
4. Isotroper Zustand mit anisotropem Netzwerk bei Raumtemperatur RT durch Abschalten der Spannung U (siehe FIG. 2 links).
5. Orientierung des Komposits durch Anlegen einer elektrischen Spannung U. Die Orientierung wird durch das anisotrope Netzwerk 9 unterstützt (siehe FIG. 2 rechts).

Durch die Kombination von Mischungen mit neuartigen hoch-Δn Materialien, die Ordnung einstellender bzw. abbauender und zum Kerr-Effekt beitragender Komponenten und die in-situ Generierung anisotroper Polymernetzwerke 9 weisen die erfindungsgemäßen Komposite - gegenüber der Nutzung des Kerr-Effektes in typischen Flüssigkeiten - eine signifikante Erhöhung der spannungsinduzierten Modulation der polarisationsunabhängigen optischen Eigenschaften auf. Hierbei sind die Komposite aus verschieden Funktionskomponenten aufgebaut werden:
Das sind zum einen stäbchenförmige Molekülen5 mit großem Dipolmoment, deren Ordnungstendenz im Arbeitstemperaturbereich durch dipolare Molekülen mit eingeschränkter Mesogenität (Semi-Mesogene 4) reduziert wird. Die Semi-Mesogene 4 spielen hierbei die entscheidende Rolle, da sie quasi als Störung gegenüber den stäbchenförmigen hoch-Δn Verbindungen fungieren und so deren Ordnungstendenz im Arbeitstemperaturbereich partiell erniedrigen und die Ausbildung geordneter Zustände, wie LC-Phasen, verhindern. Da sie aber ebenfalls eine hohe dielektrische Anisotropie aufweisen, tragen sie zum Kerr-Effekt in kooperativer Weise bei.

Eine weitere wesentliche Komponente sind die photovernetzbaren Reaktiv-Mesogenen 8, kombiniert mit einem Photoinitiator 6. Unterhalb des Arbeitstemperaturbereiches liegen die Ausgangsmischungen in einer nematischen LC Phase vor, die durch Grenzflächeneffekte und/oder elektrische Spannung homöotrop orientiert werden können. Eine UV- Bestrahlung in diesem Zustand führt durch die Photopolymerisation der Reaktiv-Mesogene 8 zur Ausbildung eines weitmaschigen, losen, anisotropen und orientierend wirkenden Netzwerkes 9. Die resultierenden Komposite sind bei Raumtemperatur bzw. im Arbeitstemperaturbereich jedoch isotrop, nicht streuend und optisch transparent. Wird jedoch eine genügend hohe elektrische Spannung angelegt, so orientieren sich die polaren stäbchenförmigen Moleküle 5 der isotropen Flüssigkeit in Richtung der Feldlinien senkrecht zu den Substraten, wodurch die Brechzahl geändert wird. Hierbei unterstützt das anisotrope Netzwerk 9 die Ausrichtung der stäbchenförmigen, polaren Moleküle 5 des Komposits durch einen Vorordnungseffekt und verstärkt somit den optischen Kerr-Effekt. Im Ergebnis wird gegenüber dem Stand der Technik eine wesentlich stärkere Brechzahlmodulation bei geringeren Schaltspannungen erreicht. Darüber hinaus wird die Temperaturabhängigkeit des Prozesses wesentlich reduziert und so die technische Nutzung ermöglicht. Der notwendige spannungsinduzierte Brechungsindexhub bzw. Phasenhub wird auf der Basis des elektro-optischen Kerr-Effektes in den erfindungsgemäßen Kompositen erzeugt. Die isotropen, flüssigen Komposite zeichnen sich durch sehr kurze Schaltzeiten aus.

Bei der vorstehend beschriebenen Konfiguration sind alle Schaltzustände symmetrisch zur Durchstrahlungsrichtung und somit polarisationsunabhängig. Insgesamt erlauben die erfindungsgemäßen Komposite die Nutzung des elektrooptischen Basiseffektes zur Herstellung von Dünnschichtelemente mit LinsenFunktion, da der Werte der Brechzahlmodulation signifikant erhöht, die Schaltzeiten verringert und die erforderliche Schaltspannung reduziert wird. Dabei können im Rahmen der Erfindung neuartige Komposite Muster adressierter diffraktiver Linsen als Basiselemente hergestellt werden. Die Erzeugung von aktiven Fresnel- oder Phasen-Zonenplatten erfordert alternativ die Herstellung ringförmiger aperiodischer Elektrodenstrukturen und deren Kontaktierung. Die Ringelektroden können in ITO hergestellt werden. Beide Methoden sind zur Realisierung schaltbarer Linsen, Fresnel-Strukur im Substrat oder im aktiven Materialgeeignet, wobei die erfindungsgemäße schaltbare diffraktive Dünnschicht-Linse für verschiedene optische Anwendungen konzipiert und angepasst werden kann, was nachstehend näher erläutert wird.

Wie vorstehend ausgeführt, sind schaltbare Linsen auf Basis des Electrowetting-Prinzips und von Elastomer-Membranen aufgrund ihres Gewichts, der voluminösen Versorgungskomponenten und der eingeschränkten Apertur für Sehhilfen und Teleskop-Brillen wenig geeignet. Auch für die Herstellung von Hybridoptiken sind diese Ansätze nur

begrenzt nutzbar.

Schaltbare Linsen auf Basis von Flüssigkristallen zeigen diese Nachteile nicht. Jedoch schränkt die Polarisationsabhängigkeit orientierter Flüssigkristalle diesen Ansatz stark ein. Um diesen Nachteil zu überwinden, müssen zusätzliche optische Komponenten wie z.B. Polarisatoren oder mehrere LC-Elemente mit gegenläufiger LC-Orientierung (siehe A.Y.G.; Ko, S.W.; Huang, S.H.; Chen, Y.Y.; Lin, T.H., Opt. Express 2011, 19, 2294-2300) oder gegenläufig orientierende Schichten (siehe insbesondere Ren, H.; Lin, Y.H.; Fan, Y.H.; Wu, S.T. Appl. Phys. Lett. 2005, 86, 141110; Lin, Y.H.; Ren, H.; Wu, Y.H.; Zhao, Y.; Fang, J.; Ge, Z.; Wu, S.T. Opt. Express 2005, 13, 8746-8752; Wang, B.; Ye, M.; Sato, S., Opt. Commun. 2005, 250, 266-273) eingesetzt werden. Dadurch wird aber die Lichtausbeute reduziert, der Systemaufbau wird deutlich aufwändiger und es entstehen zusätzliche Fehlerquellen in der Fertigung.

Isotrope LC Elemente auf PDLC Basis, weisen dagegen eine starke Streuung der Droplets unterschiedlicher Orientierung im OFF-Ausgangszustand auf. Nano-PDLC Systeme, die optisch in beiden Zuständen nahezu transparent sind, weisen ebenfalls eine Reststreuung auf. Außerdem ist die notwendige Schaltspannung vergleichsweise hoch und die Schaltzeiten sind durch die Wechselwirkung der Nanometer großen Droplets mit der sie einschließenden Polymermatrix deutlich länger als die anderer LC-Elemente.

Da bei LC Elementen der Prozess der dielektrischen Reorientierung (besonders im feldfreien Zustand) generell relativ langsam ist, wurden in den letzten Jahren zahlreiche Ansätze verfolgt, um kürzere Schaltzeiten von LCDs und für andere LC-Elemente zu erreichen. Beispiele dafür sind: die Optimierung der viskoelastischen Parameter von NLC's, das Übersteuern des Systems (siehe D.-K. Yang and S.-T. Wu, Fundamentals of Liquid Crystal Devices (John Wiley, New York, 2006)), das "Neuausrichten" eines NLC's in Sub-μm-Polymer-Netzwerk-Templaten (siehe J. Xiang and O. D. Lavrentovich, Appl. Phys. Lett. 103, 051112 (2013)) oder auch durch "Dual Frequency"-LC's (DFLC) (siehe B. Golovin, S. V. Shiyanovskii, and O. D. Lavrentovich, Appl. Phys. Lett. 83, 3864 (2003)), oberflächenstabilisierte ferroelektrische LC's (SSFLC) oder von chiral smektischen LC's (siehe G. Polushin, V. B. Rogozhin, and E. I. Ryumtsev Doklady Physical Chemistry, 2015, Vol. 465, Part 2, pp. 298-300).

Der Kerr-Effekt, der auf der Ausrichtung polarer Moleküle (siehe beispielsweise Bing-Xiang Li, Volodymyr Borshch, Sergij V. Shiyanovskii, Shao-Bin Liu; Oleg D. Lavrentovich, Appl. Phys. Lett. 104, 201105 (2014)) basiert und nicht die dielektrische Reorientierung des LC-Direktors orientierter Flüssigkristalle erfordert (Frederiks-Effekt), weist Schaltzeiten im Nanosekunden-Bereich auf (1-33 ns). Die in konventionellen Kerr-Flüssigkeiten notwendige Schaltspannung beträgt jedoch mehrere hundert Volt (300 bis 900V, E =~$10^8$ V/m), wobei Werte der elektrisch induzierten Doppelbrechung von 0.001 bis 0.01 erreicht werden. Diese Ansätze sind durch kompliziertere Ansteuerungsschaltungen, durch Hysterese-Verhalten und auch durch instabile Schaltzustände (Su Xu, Yan Li, Yifan Liu, Jie Sun, Hongwen Ren, Shin-Tson Wu, Micromachines 2014, 5, 300-324) limitiert.

Eine Alternative sind Blaue LC Phasen, die eine komplexe 3D Struktur aufweisen, aber im feldfreien Zustand optisch isotrop sind. Sie zeichnen sich durch kurze Schaltzeiten aus, sind aber wegen der sehr kleinen thermischen Existenzbereiche der Phasen für Linsen-Anwendungen ungeeignet. Polymerverstärkte Blauen Phasen (PSBP, siehe Su Xu, Yan Li, Yifan Liu, Jie Sun, Hongwen Ren, Shin-Tson Wu, Micromachines 2014, 5, 300-324) zeigen eine höhere Brechzahlmodulation, mit applikationsrelevanten Existenzbereichen, aber weisen relativ hohe Schaltspannungen und deutliche Streueffekte (siehe Y. Haseba and H. Kikuchi,Mol. Cryst. Liq. Cryst., 2007, 470,1; Young-Cheol Yang and Deng-Ke Yang Applied Physics Letters 98, 023502, 2011) im OFF-Zustand auf.

Die Orientierung polarer Moleküle im elektrischen Feld ist seit langem als optischer Kerr-Effekt bekannt. Die Kerr-Konstanten konventioneller Flüssigkeiten wie z.B. Nitrobenzen oder Schwefelkohlenstoff sind jedoch für die Linsen-Anwendung um Größenordnungen zu niedrig und die Schaltspannung für relevante Schichtdicken um Größenordnung zu hoch. Deutlich höhere Kerr-Konstanten, mit Schaltzeiten im Millisekunden- und sub-ms-Bereich, weisen isotrope Schmelzen nematischer Flüssigkristalle auf (siehe F. Costache, M. Blasl Optik & Photonik Volume 6, Issue 4, pages 29-31, December 2011). Dies führt zu polarisationsfreien, schnell schaltenden und effizienten Kerr-Systemen. Der Effekt hat offensichtlich zwei Ursachen, zum einen bewirken die stäbchenförmigen, polaren Flüssigkristalle mit einem langgestreckten π-System hohe Kerr-Konstanten und zum anderen ist die Ursache im nematischen Vororientierungseffekt von Molekülschwärmen oberhalb des Klärpunkts zu sehen. Die daraus resultierende extrem starke Temperaturabhängigkeit des Effektes, ist ein wesentlicher Nachteil dieses Ansatzes.

Die beschriebenen Nachteile werden durch die erfindungsgemäßen isotropen Komposite überwunden. Durch die Kombination isotroper Mesogene und Semi-Mesogen-Mischungen in anisotropen Polymernetzwerken 9 werden hohe Werten der Brechzahlmodulation bei schnellen Schaltzeiten und moderaten Schaltspannungen erreicht. Das neuartige Materialkonzept kann zur Herstellung elektrisch schaltbarer bzw. einstellbarer optischer Linsen und anderer optischer Elemente auf Grundlage des optischen Kerr-Effekts genutzt werden.

Dafür wurden flüssigkristalline Verbindungen mit sehr hoher Brechzahl-Anosotropie ausgewählt und, auf diese abgestimmt, isotrope Semi-Mesogene entwickelt und mit ersteren gemischt, so dass die resultierenden Mischungen beider Komponenten nur noch latent flüssigkristalline Eigenschaften aufweisen. Insbesondere liegen diese ohne Anlegen von elektrischer Spannung im Arbeitstemperaturbereich als isotrope Flüssigkeiten vor. Die erfindungsgemäßen Semi-Mesogene 4 sind in Struktur, ihrer Eigenschaftskombination und Funktion eine neue Klasse von Funktionsmaterialien.

Die Einstellung der dafür erforderlichen Eigenschaften durch geeignetes Moleküldesign und effiziente Synthesenwird nachfolgend noch näher beschrieben.

Die erfindungsgemäßen Komposite erfordern ein genaues Einstellen der optischen und dynamischen Eigenschaften sowie der zwischenmolekularen Wechselwirkungen der Hauptkomponenten dieser Mischungen (siehe FIG. 3), bestehend aus:

- flüssigkristallinen Verbindungen mit hoher Brechzahl-Anisotropie,
- Semi-Mesogenen 4 zur Einstellung der Ordnung sowie
- photopolymerisierbarer Reaktiv-Mesogene 8 zur Ausbildung eines anisotropen Netzwerks 9.

Erfindungsgemäß enthalten die Kerr-Mischungen stäbchenförmige Flüssigkristalle 5 mit großer Brechzahl-Anisotropie. Deren hohe Ordnungstendenz sowie deren hohe Schmelz- und Klärpunkte werden durch Mischen mit Semi-Mesogenen 4 derartig erniedrigt, dass die Mischungen im Arbeitstemperaturbereich RT als isotrope Flüssigkeiten vorliegen. In aufwendigen Versuchsreihen wurden verschiedene molekulare Ansätze zur Einstellung dieser Eigenschaftskombination geprüft: so durch Einstellung geeigneter Länge/Breite-Verhältnisse, die Variation der Länge der starren aromatischen Ringsysteme, der Länge und Verzweigung der Flügelgruppen und durch Variation der Polarität der Kopfgruppe d.h., allgemein die Einstellung geeigneter, die LC-Phase unterdrückenden zwischenmolekularen Wechselwirkungen. Die polare Semi-Mesogene 4 wurden so designt, dass sie ebenfalls im elektrischen Feld orientiert werden können, aber die flüssigkristallinen Eigenschaften der Mischungen unterdrücken.

Diese Semi-Mesogene 4 weisen nur noch potentiell LC-Eigenschaften auf und sind isotrope Flüssigkeiten, die nur noch latent flüssigkristalline Eigenschaften aufweisen.

Mit Hinblick auf die ebenfalls geforderten optischen und elektro-optischen Eigenschaften der Kerr-Mischungen, können die Semi-Mesogene 4 nicht durch ein beliebiges Lösungsmittel ersetzt werden. Die Orientierungsordnung der Flüssigkristalle wird erfindungsgemäß definiert abgebaut und eingestellt. So sollen die finalen Mischungen im Arbeitsbereich als optisch isotrope Flüssigkeit vorliegen, jedoch eine nematische Vororientierungstendenz aufweisen. Bei tiefen Temperaturen sollen sie jedoch flüssigkristallin sein und sich durch Aligninglayer oder durch Anlegen eines elektrischen Feldes homöotrop ausrichten lassen. Diese definierte Orientierungsordnung ist für den Aufbau des anisotropen Netzwerkes durch Photopolymerisation bei tiefen Temperaturen notwendig.

Die Semi-Mesogene 4 haben weitere Funktionen zu erfüllen, so tragen sie erfindungsgemäß durch ihr Moleküldesign auch zum optischen Kerr-Effekt bei. Daher sollen sie ebenfalls eine hohe dielektrische Anisotropie aufweisen, einen Beitrag zu einer hohen Brechzahl-Anisotropie leisten sowie die kooperative Orientierung der Mischungen im elektrischen Feld unterstützen. Diese Kombination dieser verschiedenen Eigenschaften wird durch folgende Strukturmerkmale erreicht:

(1) Der Abbau der flüssigkristallinen Ordnung ist durch sekundäre oder tertiäre Verzweigung der Alkylflügelgruppe und/oder durch lateralen Substituenten zu erreichen.

(2) Eine hohe dielektrische Anisotropie, hohe Kerr-Konstanten bzw. hohe Brechzahl-Anisotropien werden durch die Variation der polaren Kopfgruppe sowie durch die Einführung von Heterozyklen im starren Molekülteil erreicht.

Die grundlegende Architektur der Semi-Mesogene4 ist FIG. 4 zu entnehmen.

Die beschriebene Funktionalität der isotropen Semi-Mesogene 4 kann auf der Basis geeignet substituierter Biphenyle erzielt werden. Insbesondere verzweigte Flügelgruppen vergrößern die Breite eines Moleküls drastisch und führen zu einer merklichen Absenkung der Übergangstemperaturen. Durch das veränderte Länge/Breite-Verhältnis kann die Ausbildung nematischer Phasen verhindert bzw. der Existenzbereich einer solchen Phase stark reduziert werden. Dies wird durch den Einbau von zum Beispiel Methyl- und Ethylgruppen als Verzweigung der aliphatischen Flügelgruppe erreicht, wobei die Position der Verzweigung an der Flügelgruppe sehr wichtig ist.

Diese Struktureigenschaften ist nachfolgend a) für eine Flügelgruppe mit sekundärer Verzweigung, R = CN

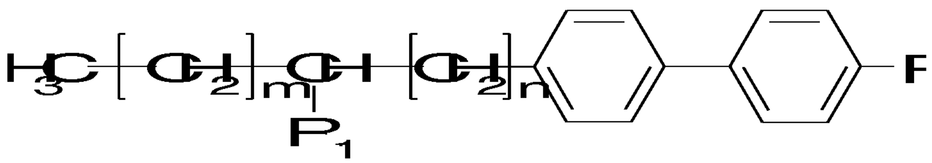

$R_1 = -CH_3, -C_2H_5$ , m=n=2-4

und b) für eine Flügelgruppe mit tertiärer Verzweigung, R = CN

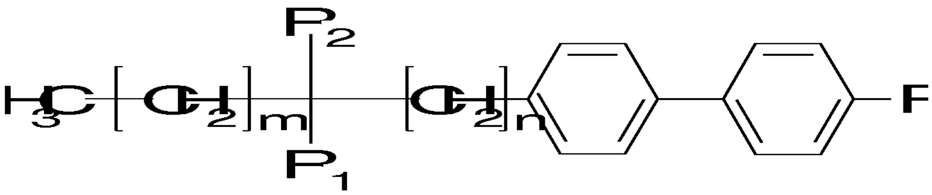

$R_1 = -CH_3, -C_2H_5$ , $m = n = 2 - 4$

dargestellt.

Das Ziel isotrope Semi-Mesogene 4 mit einer hohen dielektrischen und optischen Anisotropie, d.h. hohen $\Delta\varepsilon$- und $\Delta$**n** -Werten zu synthetisieren, kann zum Beispiel durch eine polare Kopfgruppe gefördert werden. Als besonders geeignete Gruppen, die einerseits einen hohen Beitrag zur elektrisch induzierbaren Doppelbrechung liefern und andererseits zu einer hohen dielektrischen Anisotropie beitragen, sind folgende Substituenten in die para-Position der Biphenyl-Struktur, nämlich Substitution der mesogenen Einheit mit polaren Kopfgruppen, von Vorteil:

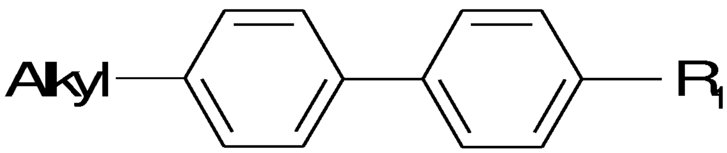

$R_1$ = -CN, -NCS, - Hal (F, Br, Cl)

Weiterhin kann das permanente Dipolmoment und damit die dielektrische Anisotropie $\Delta\varepsilon$ der Semi-Mesogene 4 durch den Austausch von Phenylringen gegen heteroaromatische Kerne erhöht werden. Während sich die Molekülgeometrie durch heteroaromatischen Kerne nur wenig ändert, wird gemäß A. Boller, M. Cereghetti, H. Scherrer, Z. Naturforsch., Teil B, 33, 433 (1978) ein starker Einfluss auf die dielektrischen Eigenschaften erwartet, dabei ist die Position der Heteroatome bzw. auch des Heteroaromaten im Vergleich zur Kopfgruppe so zu wählen, dass sich die Dipolmomente additiv verhalten. Neben der Erhöhung der dielektrischen Anisotropie ist auch ein Anstieg der Polarisierbarkeitsanisotropie und damit eine höhere Doppelbrechung zu erwarten. Dies ist insbesondere für Semi-Mesogen 4 mit Pyrimidin-Ring und Variation der Kopfgruppe nachfolgend dargestellt.

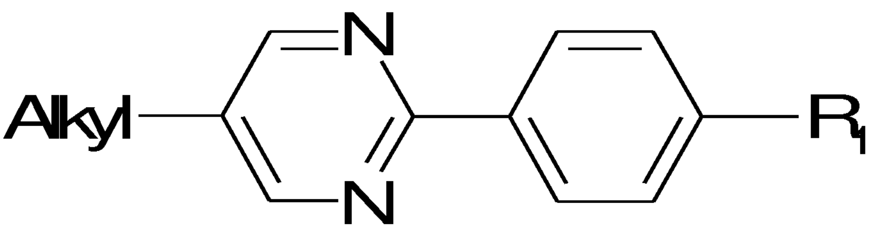

$R_1$ = -CN, -NCS, -Hal (F, Br, Cl)

Die dielektrische Anisotropie kann weiterhin durch polare Gruppen an den starren Ringen erhöht werden. Laterale Substituenten können gleichzeitig einer Teilkompensation der Dipolmomente durch Dimerenbildung entgegenwirken.

So bewirkt insbesondere die Einführung von zwei Fluoratomen in 3,5-Stellung eine Erhöhung der dielektrischen Anisotropie um 8.5 Einheiten (siehe P. Kirsch, A. Hahn, Eur. J. of Org. Chem. (2005), (14), 3095-3100. Im Fall lateraler 3,5-Substitution bleibt die elektrische Partialladung entlang der Moleküllängsachse erhalten (d.h. ein Dipolmoment parallel zur Längsachse), woraus eine positive dielektrische Anisotropie resultiert. Gleichzeitig bewirken die lateralen Substituenten eine Erniedrigung der Übergangstemperaturen. Insbesondere die Erhöhung der dielektrischen Anisotropie durch die Einführung von polaren Substituenten ist nachfolgend dargestellt.

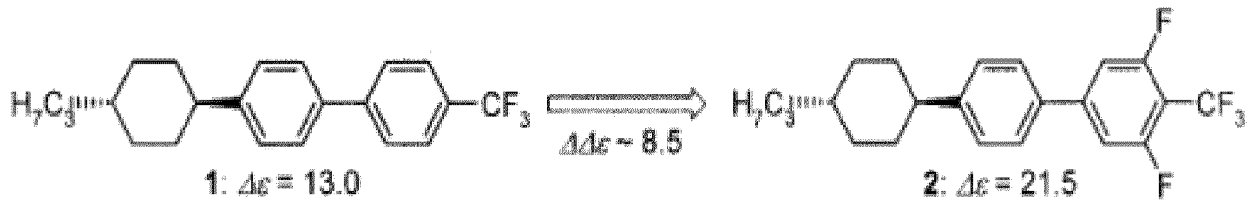


Erfindungsgemäß erfolgt die Unterstützung der feld-induzierten Ausrichtung der isotropen Mischung durch ein anisotropes Polymernetzwerk 9. Der orientierende Memory-Effekt des Netzwerkes 9 in Kombination mit dem nematischen Vorordnungseffekt der latent flüssigkristallinen Komposite verstärkt den optischen Kerr-Effekt.

Eine weitere, wichtige Aufgabe des Netzwerkes 9 besteht darin, die Temperaturabhängigkeit des Kerr-Effekts signifikant herabzusetzen. Zum Aufbau des Netzwerkes 9 werden insbesondere aromatische Reaktiv-Mesogene 8 und aliphathische Monomere in die isotrope Mischung bestehend aus Mesogenen und Semi-Mesogenen 4 eingebracht. Diese werden dann durch Photopolymerisation im homöotrop geordneten Zustand de Komposits bei tiefen Temperaturen polymerisiert und bilden ein weitmaschiges anisotropes Netzwerk 9 aus. Das Zumischen der Reaktiv-Mesogene 8 erfordert eine Abstimmung der zwischenmolekularen Wechselwirkungen in den Ausgangsmischungen sowie in den finalen Kompositen nach Aufbau der Netzwerkstruktur. Um zusätzlich eine hohe Stabilität des Netzwerkes 9 zu erreichen, ist das Netzwerk 9 durch Funktionalisierung des Aligninglayers 3 kovalent mit den Substraten verknüpft. FIG 5 zeigt die Erzeugung eines mehrdimensionalen, anisotropen Netzwerks, nämlich:

a) isotrope Mischung mit Reaktiv-Mesogen8 en in homöotrop orientierten Mischung (Prekomposit) (siehe FIG. 5a) und

b) kovalente Verknüpfung von Netzwerk 9 und Aligningschicht 3 mit netzwerkstabilisierten Molekülen(siehe FIG. 5b).

Die kovalente Verankerung des Netzwerke 9s an den Grenzflächen der Aligning-Schichten 3 führt zu einer signifikanten Verbesserung des elektro-optischen Schaltverhaltens und der Langzeitstabilität. Dazu wird das Aligning-Material mit temperaturstabilen, reaktiven Gruppen (z.B. OH-Gruppen) funktionalisiert. Das modifizierte Material ist auf das Substrat aufzubringen und die funktionellen Gruppen so modifiziert, dass sie mit bifunktionalen Reaktiv-Mesogenen 8 reagieren können. Die durch radikalische Photopolymerisation ausgelöste Netzwerkbildung schließt den Verbund mit den beiden funktionalisierten AligningLayern 3 ein, so dass das anisotrope Netzwerk 9 grenzflächenstabilisiert die Zelle permanent durchspannt. Die notwendige Konzentration der Bindungsstellen an den Grenzflächen ist hierbei auf geeignete Weise einzustellen.

Neben der Verbesserung der Eigenschaften der Komposite durch die Netzwerkbildung, basierend auf aliphatischen respektive aromatischen Reaktiv-Mesogenen 8, werden auch mögliche Entmischungserscheinungen unterdrückt.

Die erfindungsgemäßen Kerr-Komposite entsprechen, beispielsweise für die Anwendungsfelder Linsen, insbesondere für Sehhilfen und Teleskop-Brillen, folgendem Anforderungsprofil:

- hohe Kerr-Konstante
- hohe dielektrische Anisotropie
- isotrop und fluid im Arbeitstemperaturbereich durch die Semi-Mesogene 4
- hohe elektrisch induzierbare Brechzahlmodulation durch stäbchenförmige Moleküle 5 und polare Semi-Mesogene 4
- gute Homogenität (Mischbarkeit der Substanzen, geringe Tendenz zur Phasenseparation) im gesamten Arbeitstemperaturbereich
- geringe Schaltzeiten durch niedrige Rotationsviskosität
- geringe Absorption im sichtbaren Spektralbereich
- hohe (photo)-chemische Stabilität.

Weiterhin sind Polarisationsunabhängigkeit und schnelle Schaltzeiten des Ansatzes wesentliche Vorteile im Vergleich zu Flüssigkristall basierten Ansätzen. Die erfindungsgemäßen Komposite verbinden Vorzüge flüssigkristalliner Systeme (große Kerr-Konstanten stäbchenförmiger polarer Moleküle und hoher Ordnungstendenz) und andererseits der von isotropen Flüssigkeiten mit geringer Rotationsviskosität und sehr kleiner Schaltzeiten und so verbinden diese die Vorteile calamitischer Flüssigkristalle mit denen isotroper Flüssigkeiten.

Für Sehhilfen weist die erfindungsgemäße Linse ein polarisationsfreies, elektrisch einstellbares Nahsichtfeld bei moderate Schaltzeiten und entsprechend der Applikation unkritische Schaltspannungen von < 42V auf. Der Durchmesser der Linse ermöglicht ein angemessenes Sichtfeld und die Brechkraft der schaltbaren Linse liegt bei Werten im einstelligen Dioptrien-Bereich. Die optische Funktion ist im Wesentlichen wenig von der Lichtwellenlänge abhängig und

die Beugungseffizienz ist recht hoch, so dass "Geisterbilder" vermieden werden. Weiterhin ist die erfindungsgemäße Linse mit typischen Brillengläsern kombinierbar und weist für die Ansteuerung des Elements ein geringes Gewicht und Bauvolumen auf, so dass diese zusammen mit einem normalen Brillenglas bzw. in einem Brillengestell integriert werden kann.

Im Rahmen der Erfindung kann die Nutzung für Sehhilfen auf eine tunebare, individuell einstellbare Sehhilfe erweitert werden. Durch Nutzung von pixelierten Elektroden-Rastern, ähnlich dem eines transmissiven LC-Displays, lassen sich für sehr kleine Bereiche die optischen Eigenschaften individuell einstellen. Damit ist es möglich, diffraktive Linsen zu erzeugen, die zum Beispiel eine richtungsabhängige Brechkraft aufweisen, wie sie zur Korrektur eines Astigmatismus benötigt werden. Die Einstellung der Linse kann dann individuell angepasst und gespeichert werden, wie dies bei der binokularen elektronischen Brille der EP 1 463 970 B1 beschrieben ist.

Im Rahmen der Erfindung ist der Einsatz der erfindungsgemäßen Linse in einem schaltbaren Vergrößerungssystem für Teleskop-Brillen möglich. Beim Vergrößerungssystem gibt es teilweise ähnliche Anforderungen wie im Bereich Sehhilfen. Jedoch muss die Brechkraft von Okular- und Objektiv-Linse deutlich stärker sein. Bei der notwendigen Apertur sind die Anforderungen insbesondere für die Okular-Linse jedoch deutlich geringer. Für das Vergrößerungssystem ist ein Vergrößerungsfaktor von 2,5 ausreichend. Wie beim Einzelelement ist auch das System mit einem möglichst geringen Gewicht realisierbar, um den angestrebten hohen Tragekomfort zu ermöglichen. Hierin unterscheidet sich die erfindungsgemäße Lösung deutlich von gegenwärtig verfügbaren Teleskop-Brillen. Ein weiterer wesentlicher Vorteil liegt natürlich darin, dass im off-Zustand das gesamte Sichtfeld zur Verfügung steht; zu integrierende Steuer- und Versorgungselemente schränken dieses nicht ein.

Die erfindungsgemäße Linse erfüllt die technischen Anforderungen für:

a) polarisationsfreies, elektrisch einstellbares Nahsichtfeld für Sehhilfen, insbesondere Sehhilfe mit zuschaltbarem Nahsichtteil,
b) tunebare, individuell einstellbare Sehhilfen (Sehhilfen mit pixelweiser Ansteuerung unter Benutzung µm-strukturierter Elektroden, ähnlich bei einem transmissiven Aktivmatrix-Display) und
c) schaltbares Vergrößerungssystem für Teleskop-Brillen bzw. Multifunktionsbrille,

wie aus nachfolgender Tabelle ersichtlich ist.

| | a) | b) | c) |
|---|---|---|---|
| Schaltzeiten | < 10ms | < 10ms | < 10ms |
| Schaltspannung | < 42V | < 42V | < 42V |
| Durchmesser | > 25mm | > 25mm | > 4mm (Okular)<br>> 20mm (Objektiv) |
| Beugungseffizienz | > 80% | > 80% | > 80% |
| Brechkraft bzw. Brennweite | > 4 dpt | > 8 dpt (asphärisch) | < (-)30mm (Okular)<br>< 75 mm (Objektiv) |

Weitere Anforderungen, die erfüllt werden sind hohe Transparenz, Reproduzierbarkeit, hohe Verlässlichkeit und hoher Füllfaktor zur Vermeidung von "ghosting" sowie eine polarisationsunabhängige Funktionsweise. Darüber hinaus sind die einzelnen Elemente im off-Zustand optisch neutral.

Die Erfindung ist nicht auf die dargestellten und beschriebenen Ausführungsbeispiele beschränkt, sondern umfasst auch alle im Sinne der Erfindung gleichwirkende Ausführungen.

Beispielsweise kann eine Synthese auf Basis lateral substituierter Biphenyle zur Herstellung von Semi-Mesogenen und Synthese eines Katalysators für die finale Kopplungsreaktion zur Herstellung der substituierten Biphenyle durchgeführt werden; zur Herstellung von 5 Semi-Mesogenen kann eine Synthese und Charakterisierung von 5 substituierten Arylboronsäuren durchgeführt werden; zur Abformung von Stufenlinsen in verschiedene Materialien kann eine Oberflächen-Charakterisierung verfügbarer Stufenlinsen mittels Profilometer einschließlich der Herstellung von PDMS-Abgüssen durchgeführt werden (Herstellung von Stempeln von Oberflächengittern und Mikrolinsen-Arrays einschließlich von Epoxid-Mischung zum Abformen von Oberflächengittern in Sylgard 184 (SilikonElastomer-Kit) und Herstellung von Replika mit NOA65 (Optischer Klebstoff: Viskosität 1200 (cps), Brechungsindex $n_d$ 1.52), insbesondere geblazter Gitter (Methode zum Abformen von Oberflächen-Gittern mit Sägezahn-Profil zur Herstellung lineare Oberflächen-Gitter, welche als Modellstrukturen für entsprechende Fresnel Zonenplatten dienen); die Abformung der Oberflächen-Gitter erfolgt mit Hilfe eines Masters (kommerzielles Beugungsgitter), dieses wurde als Negativ-Kopie in POMS abgeformt und mit diesem

"Stempel" lassen sich dann über einen weiteren Abformungsschritt mit NOA positive Replikate herstellen, die u.a. für den Aufbau schaltbarer optischer Elemente geeignet sind; Anwendung entsprechender Mechanismen der Aryl-Aryl-Kupplung nach Suzuki-Miyaura (Synthese von Biphenylen oder Biphenylderivaten durch Bildung einer C-C-Bindung) bzw. analoger Reaktionen und Anwendung chromatographischer Aufreinigung von Zwischen verbindungen (insbesondere mehrstufige Synthese mit zwischenzeitlichen Reinigungsoperationen). Die Anwendungsgebiete des erfindungsgemäßen elektrisch steuerbaren optischen Elements erstrecken sich in viele Bereiche der Technik, insbesondere:

Messtechnik

- Analyse von Proben mit Kerrzelle im Messkopf
- Waferinspektionssysteme
- Polarisator in Mikroskopen oder Endoskopen
- Messung elektrischer Feldstärke

Fertigungstechnik

- mikrolithographische Projektionsbelichtungsanlage für IC's oder LCD's
- Lichtmodulator zur Belichtung von Druckplatten
- Polarisationsrichtung drehendes Element bei der Aufzeichnung auf CD oder DVD

Nachrichtenübertragungstechnik

- schneller Lichtschalter mit Kerrzelle und mit oder ohne nachgeschaltetem Polarisationsfilter zur Digitalisierung von Signalen bis zu 100 GHz (optisches Signal)

Medizintechnik

- optischer Modulator in einem MRT-System (Magnetresonanztomographie-System)
- Polarisator in Mikroskopen oder Endoskopen

Bezugszeichenliste:

| | |
|---|---|
| 1 | Substrate |
| 2 | leitfähige Schicht (leitfähige ITO-Elektrode) |
| 3 | Orientierungsschicht (Aligninglayer) |
| 4 | nicht stäbchenförmiges Molekül (aktives Komposit, Semi-Mesogen, Precursor-Mischung) |
| 5 | stäbchenförmiges Molekül (aktives Komposit, Precursor-Mischung) |
| 6 | Photoinitiatoren |
| 7 | aliphatische Monomere |
| 8 | reaktive Mesogene |
| 9 | anisotropes Netzwerk (Polymernetzwerk) |
| 10 | vernetzte Mesogene |
| K | Kerrflüssigkeit |
| RT | Arbeitstemperaturbereich |
| U | Spannung |

## Patentansprüche

1. Elektrisch steuerbares optisches Element mit einer mit Kerrflüssigkeit gefüllten Kerrzelle mit zwei Substraten (1) und einer auf die innere Oberfläche des Substrats (1) aufgebrachten leitfähigen Schicht (2), **dadurch gekennzeichnet, dass** die Kerrflüssigkeit (K) eine Mischung aus stäbchenförmigen (5) und nicht stäbchenförmigen (4) Molekülen als aktive Komposite aufweist und dass die Kerrflüssigkeit (K) eine dünne Schicht mit einem weitmaschigen, anisotropen Netzwerk (9) zwischen auf einem Substrat (1) aufgebrachten strukturierten oder/ und flächigen leitfähigen Schicht (2) in einer Dünnschichtzelle ausbildet, derart, dass entsprechend dem elektro-optischen Kerr-Effekt der Zustand der aktiven Komposite (4, 5) der Kerrflüssigkeit (K) ohne elektrisches Feld im Arbeitstemperaturbereich

RT isotrop ist und durch elektrisch kontinuierliche Einstellung der Spannung U oder durch Ein-/Ausschalten der Spannung U eine Veränderung des spannungsinduzierten Phasenhubs oder Brechungsindexhubes des optischen Elements erzeugt wird und das Licht einen Elektrodenzwischenraum senkrecht zu den Elektroden durchtritt.

2. Elektrisch steuerbares optisches Element nach Anspruch 1, **dadurch gekennzeichnet, dass** die Dünnschichtzelle zwei Glas- oder Polymersubstrate (1) aufweist, deren innere Oberfläche jeweils mit einer leitfähigen ITO-Elektrode (2) als leitfähige Schicht und auf dieser mit einer Orientierungsschicht (3) versehen ist und dass das Vorprägen für ein weitmaschiges, anisotropes Polymernetzwerk (9) mittels in die abgekühlte Kerrflüssigkeit (K) beigemischten Photoinitiatoren (6), aliphatischen Monomeren (7) und reaktiven Mesogenen (8), Ausrichten der stäbchenförmiger Moleküle (5) durch Anlegen einer Spannung U und UV-Bestrahlung der Kerrflüssigkeit (K) erfolgt.

3. Elektrisch steuerbares optisches Element nach Anspruch 2, **dadurch gekennzeichnet, dass** die zu einer homöotropen Orientierung führende Orientierungsschicht (3) photovernetzbare bzw. photopolymersierbare Gruppen enthält und dass das anisotrope Netzwerk (9) kovalent an die beiden Substratgrenzflächen fixiert ist, wodurch das Netzwerk (9) in seiner anisotropen Form auch bei der Isotropisierung der Kerrflüssigkeit (K) durch Temperaturerhöhung in den Arbeitsbereich annähernd Raumtemperatur RT erhalten bleibt.

4. Elektrisch steuerbares optisches Element nach Anspruch 1, **dadurch gekennzeichnet, dass** die stäbchenförmigen Moleküle (5) mit großem Dipolmoment als aktive Komposite der Kerrflüssigkeit (K) in Form nanoskaliger Cluster oder Nanopartikel in weitmaschigen anisotropen Polymernetzwerk (9) fixiert vorliegen, wobei die Fixierung der formanisotropen Moleküle (5) im Netzwerk (9) durch nicht-kovalente zwischenmolekulare Wechselwirkungen erfolgt, und wobei die Molekül-Cluster oder sphärische und asphärische Nanopartikeln einer Precursor-Mischung (4, 5) dispergiert werden, wodurch einerseits eine Erhöhung des Kerr-Effekts durch hohe stabile Orientierungsordnung der geordnet fixierten Cluster oder Nanopartikel erreicht und andererseits die Temperaturabhängigkeit des Kerr-Effekts in Lösungen oder LC-Materialien oberhalb des Klärpunktes minimiert wird.

5. Elektrisch steuerbares optisches Element nach Anspruch 4, **dadurch gekennzeichnet, dass** die zwischenmolekulare Wechselwirkungen der formanisotropen Moleküle (5) auf Basis von H-Brückenbindungen, ionische Wechselwirkungen und $\pi\pi$-Wechselwirkungen von Pyridin/Säure oder von Säure/Säure gebildet wird und dass die unterschiedliche Temperaturabhängigkeit der zwischenmolekularen Wechselwirkungen und des Vororientierungseffekt zur Stabilisierung des Kerr-Effekts genutzt wird.

6. Elektrisch steuerbares optisches Element nach Anspruch 1, **dadurch gekennzeichnet, dass** die nicht stäbchenförmigen Semi-Mesogene (4) als aktive Komposite der Kerrflüssigkeit (K) durch zwischenmolekulare Wechselwirkungen gebildet werden und dass eine Temperaturerhöhung zur Schwächung der nicht-kovalenten Wechselwirkungen führt, wobei die Komplexe teilweise abgebaut werden.

7. Elektrisch steuerbares optisches Element nach Anspruch einem oder mehreren der Ansprüche 1 bis 6, **dadurch gekennzeichnet, dass** um isotrope Semi-Mesogene (4) mit einer hohen dielektrischen und optischen Anisotropie zu synthetisieren, Substituenten in die para-Position einer Biphenyl-Struktur gemäß

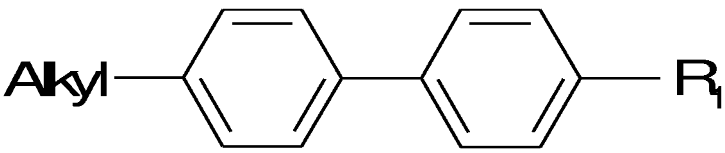

$R_1$ = -CN, -NCS, - Hal (F, Br, Cl)

als polare Kopfgruppe eingefügt sind.

8. Elektrisch steuerbares optisches Element nach einem oder mehreren der Ansprüche 1 bis 7, **dadurch gekennzeichnet, dass** durch einen Austausch von Phenylringen gegen heteroaromatische Kerne bei Semi- Mesogenen (4) mit Pyrimidin-Ring und Variation der Kopfgruppe gemäß

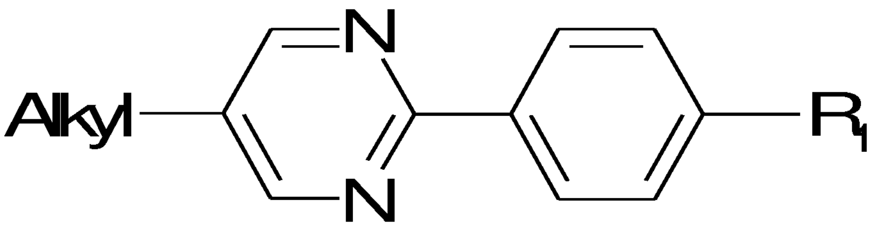

$R_1$ = -CN, -NCS, -Hal (F, Br, Cl)

das permanente Dipolmoment und damit die dielektrische Anisotropie der Semi-Mesogene (4) erhöht sind.

**9.** Verfahren zur Herstellung eines elektrisch steuerbaren optischen Element mit einer mit Kerrflüssigkeit gefüllten Kerrzelle mit zwei Substraten (1) und einer auf die innere Oberfläche des Substrats (1) aufgebrachten leitfähigen Schicht (2), **dadurch gekennzeichnet, dass**

a) die Kerrflüssigkeit (K) eine Mischung aus stäbchenförmigen (5) und nicht stäbchenförmigen (4) Molekülen als aktive Komposite, reaktiven Mesogenen (8), Photoinitiatoren (6) und aliphatische Monomere (7) aufweist,
b) die Kerrflüssigkeit (K) in eine als Dünnschichtzelle ausgestaltete Kerrzelle (K) gefüllt wird,
c) die Kerrflüssigkeit (K) auf eine tiefere Temperatur T als Raumtemperatur RT abgekühlt wird, bei der sich eine LC-Phase mit einer homöotropen Orientierung ausbildet,
d) durch eine UV-Bestrahlung der homöotrop orientierten Schichten Radikale erzeugt werden, die eine Polymerisation der orientierten reaktiven Semi-Mesogenen (8) bewirken, derart, dass ein weitmaschiges, loses anisotropes Netzwerk (9) aus mit den aliphatischen Monomeren (7) vernetzten Mesogenen (10) in der Kerrflüssigkeit (K) entsteht,

so dass ohne Spannung U im Arbeitstemperaturbereich RT das Komposit aus stäbchenförmigen Molekülen (5) mit großem Dipolmoment und nicht-stäbchenförmigen, dipolare Molekülen (4) wieder isotrop ist und bei Anlegen der Spannung U sich die Moleküle des Komposits in Richtung der E-Feldlinien orientieren.

**10.** Verfahren nach Anspruch 9, **dadurch gekennzeichnet, dass** eine zu einer homöotropen Orientierung führende Orientierungsschicht (3) photovernetzbare bzw. photopolymersierbare Gruppen enthält.

## Claims

**1.** An electrically controllable optical element with a Kerr cell filled with Kerr liquid with two substrates (1) and a conductive layer (2) applied to the inner surface of the substrate (1), **characterized in that** the Kerr liquid (K) is a mixture of rod-shaped (5) and non-rod-shaped (4) molecules as active composites and that the Kerr liquid (K) has a thin layer with a wide-mesh, anisotropic network (9) between structured or / and flat conductive layer (2) applied to a substrate (1) in a thin-film cell in such a way that, in accordance with the electro-optical Kerr-effect, the state of the active composites (4, 5) of the Kerr liquid (K) is isotropic without an electric field in the working temperature range RT and by means of electrically continuous adjustment of the voltage U or by switching on / off the voltage U a change in the voltage-induced phase shift or refractive index stroke of the optical element is generated and the light passes through an electrode gap perpendicular to the electrodes.

**2.** Electrically controllable optical element according to Claim 1, **characterized in that** the thin-film cell has two glass or polymer substrates (1), the inner surface of which each has a conductive ΓΓO electrode (2) as the conductive layer and on this with an orientation layer (3) is provided and that a pre-embossing for a wide-mesh, anisotropic polymer network (9) by means of photoinitiators (6), aliphatic monomers (7) and reactive mesogens (8) mixed into the cooled core liquid (K), an alignment of the rod-shaped molecules (5) by application a voltage U and UV radiation of the Kerr liquid (K) takes place.

**3.** Electrically controllable optical element according to Claim 2, **characterized in that** the orientation layer (3) which leads to a homeotropic orientation contains photocross-linkable or photopolymerizable groups and that the anisotropic network (9) is covalently fixed to the two substrate interfaces, as a result of which the network (9) in its

anisotropic form is maintained even at the isotropization of the Kerr liquid (K) by temperature increase in the working area approximately room temperature RT.

4. Electrically controllable optical element according to claim 1, **characterized in that** the rod-shaped molecules (5) with a large dipole moment are present as active composites of the core liquid (K) in the form of nanoscale clusters or nanoparticles in wide-meshed anisotropic polymer networks (9), wherein the fixation of the shape-anisotropic molecules (5) in the network (9) by noncovalent intermolecular interactions occurs, and wherein the molecular clusters or spherical and aspherical nanoparticles of a precursor mixture (4, 5) are dispersed, which on the one hand increases the Kerr-effect by high stable order of orientation of the orderly fixed clusters or nanoparticles is achieved and on the other hand the temperature dependence of the Kerr-effect in solutions or LC-materials above the clearing point is minimized.

5. Electrically controllable optical element according to Claim 4, **characterized in that** the intermolecular interactions of the shape-anisotropic molecules (5) are formed on the basis of H-bridge bonds, ionic interactions and $\pi\pi$ interactions of pyridine / acid or of acid / acid and that the different temperature dependencies of the intermolecular interactions and the preorientation effect are used to stabilize the Kerr-effect.

6. Electrically controllable optical element according to claim 1, **characterized in that** the non-rod-shaped semi-mesogens (4) are formed as active composites of the Kerr liquid (K) by intermolecular interactions and that an increase in temperature leads to the weakening of the non-covalent interactions, the complexes are partially dismantled.

7. Electrically controllable optical element according to claim one or more of claims 1 to 6, **characterized in that** in order to synthesize isotropic semi-mesogens (4) with a high dielectric and optical anisotropy, substituents are inserted in the para position of a biphenyl structure according to

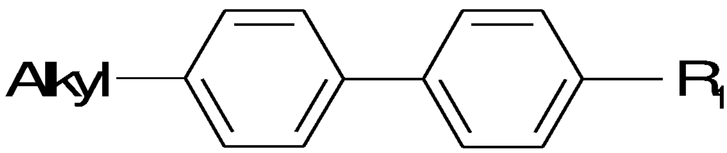

$R_1$ = -CN, -NCS, - Hal (F, Br, Cl)

as a polar head group.

8. Electrically controllable optical element according to one or more of Claims 1 to 7, **characterized in that** by exchanging phenyl rings for heteroaromatic nuclei in the case of semi-mesogens (4) with primidin-ring and varying the head group in accordance with

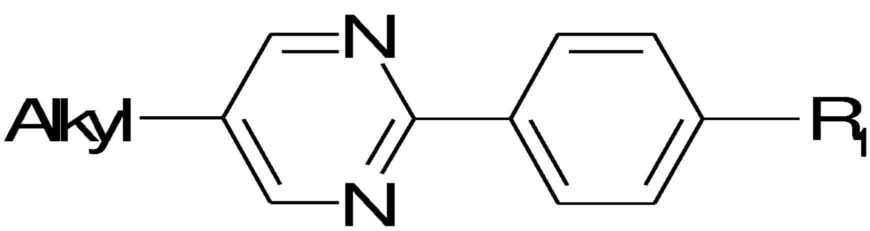

$R_1$ = -CN, -NCS, -Hal (F, Br, Cl)

the permanent dipole moment and thus the dielectric anisotropy of the semi-mesogens (4) are increased.

9. Method for producing an electrically controllable optical element with a Kerr cell filled with Kerr liquid with two substrates (1) and a conductive layer (2) applied to the inner surface of the substrate (1), **characterized in that**

a) the Kerr liquid (K) is a mixture of rod-shaped (5) and non-rod-shaped (4) molecules as active composites, of reactive mesogens (8), photoinitiators (6) and aliphatic monomers (7),
b) the Kerr liquid (K) is filled into a Kerr cell (K),
c) the Kerr liquid (K) is cooled to a lower temperature T than room temperature RT, at which an LC phase with a homeotropic orientation is formed,
d) radicals are generated by UV radiation of the homeotropically oriented layers, which cause the oriented reactive semi-mesogens (8) to polymerize in such a way that a wide-mesh, loose anisotropic network (9) from the mesogens (10) cross-linked with the aliphatic monomers (7) in the Kerr fluid (K),

so that without voltage U in the working temperature range RT the composite of rod-shaped molecules (5) with large dipole moment and non-rod-shaped, dipolar molecules (4) again is isotropic and when the voltage U is applied, the molecules of the composite orient themselves in the direction of the E field lines.

**10.** A method according to claim 9, **characterized in that** an orientation layer (3) leading to a homeotropic orientation contains photocrosslinkable or photopolymerizable groups.

## Revendications

**1.** Un élément optique à commande électrique avec une cellule Kerr remplie de liquide Kerr avec deux substrats (1) et une couche conductrice (2) appliquée sur la surface intérieure du substrat (1), **caractérisée en ce que** le liquide Kerr (K) est un mélange en forme de tige (5) et des molécules non en forme de bâtonnet (4) en tant que composites actifs et que le liquide Kerr (K) a une couche mince avec un réseau anisotrope à mailles larges (9) entre une couche conductrice structurée ou / et plate (2) appliquée sur un substrat (1) dans une cellule à couches minces de telle manière que, conformément à l'effet électro-optique Kerr, sans champ électrique dans la plage de température de travail RT l'état des composites actifs (4, 5) du liquide Kerr (K) soit isotrope et au moyen d'un réglage électriquement continu de la tension U ou par activer/désactiver la tension U une variation du déphasage induit par la tension ou une course d'indice de réfraction de l'élément optique est générée et la lumière passe à travers un espace d'électrode perpendiculaire aux électrodes.

**2.** Élément optique à commande électrique selon la revendication 1, **caractérisé en ce que** la cellule à couche mince a deux substrats en verre ou en polymère (1), dont la surface intérieure a chacun une électrode conductrice ITO (2) comme couche conductrice et sur celle-ci est fourni avec une couche d'orientation (3) et que un pré-gaufrage pour un réseau de polymères anisotropes à mailles larges (9) au moyen de photoinitiateurs (6), de monomères aliphatiques (7) et de mésogènes réactifs (8) mélangés dans le liquide de base refroidi (K), et alignement des molécules en forme de bâtonnet (5) est produit par application une tension U et un rayonnement UV du liquide Kerr (K).

**3.** Élément optique à commande électrique selon la revendication 2, **caractérisé en ce que** la couche d'orientation (3) qui conduit à une orientation homéotrope contient des groupes photoréticulables ou photopolymérisables et que le réseau anisotrope (9) est fixé de manière covalente aux deux interfaces de substrat, grâce à quoi le réseau (9) est maintenue sous sa forme anisotrope, même lors de l'isotropisation du liquide de Kerr (K) par augmentation de la température dans la zone de travail, environ la température ambiante RT.

**4.** Élément optique à commande électrique selon la revendication 1, **caractérisé en ce que** les molécules en forme de bâtonnet (5) avec un grand moment dipolaire sont présentes en tant que composites actifs du liquide central (K) sous la forme d'amas nanométriques ou de nanoparticules dans des réseaux de polymères anisotropes à mailles larges (9), selon lesquelles la fixation des formes anisotropes à forme maillée molécules (5) est fait dans le réseau (9) par des interactions intermoléculaires non covalentes, et selon lesquelles les amas moléculaires ou les nanoparticules sphériques et asphériques d'un mélange précurseur (4, 5) sont dispersés, ce qui d'une part augmente l'effet Kerr de haut un ordre d'orientation stable des amas ou nanoparticules fixes ordonnés est atteint et, d'autre part, la dépendance à la température de l'effet Kerr dans les solutions ou les matériaux LC au-dessus du point de clarification est minimisée.

**5.** Élément optique à commande électrique selon la revendication 4, **caractérisé en ce que** les interactions intermoléculaires des molécules anisotropes de forme (5) sont formées sur la base de ponts en H, d'interactions ioniques et d'interactions $\pi\pi$ de pyridine / acide ou d'acide / acide et que les différentes dépendances de température les interactions intermoléculaires et l'effet de pré-orientation sont utilisés pour stabiliser l'effet Kerr.

**6.** Élément optique à commande électrique selon la revendication 1, **caractérisé en ce que** les semi-mésogènes non en forme de bâtonnet (4) sont formés comme composites actifs du liquide de Kerr (K) par des interactions intermoléculaires et qu'une augmentation de la température conduit à l'affaiblissement des interactions non covalentes, selon lesquelles les complexes sont partiellement démonté.

**7.** Élément optique à commande électrique selon la revendication une ou plusieurs des revendications 1 à 6, **caractérisé en ce que** pour synthétiser des semi-mésogènes isotropes (4) avec une anisotropie diélectrique et optique élevée, substituants en position para d'une structure biphényle selon

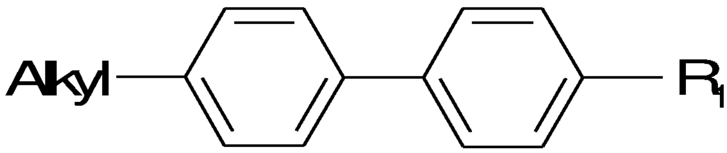

$R_1$ = -CN, -NCS, - Hal (F, Br, Cl)

est inséré en tant que groupe de tête polaire.

**8.** Elément optique à commande électrique selon une ou plusieurs des revendications 1 à 7, **caractérisé en ce que,** en échangeant des noyaux phényle contre des noyaux hétéroaromatiques dans le cas de semi-mésogènes (4) avec un cycle pyrimidine et en faisant varier le groupe de tête conformément à

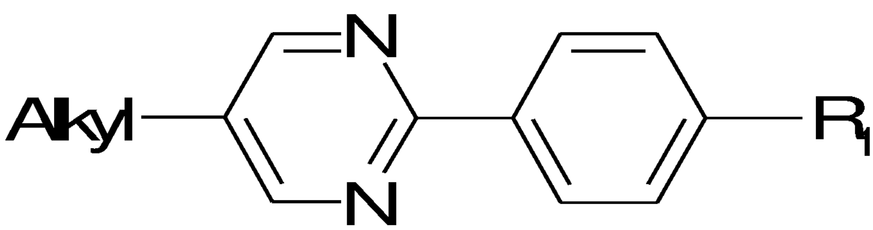

$R_1$ = -CN, -NCS, -Hal (F, Br, Cl)

le moment dipolaire permanent et donc l'anisotropie diélectrique des semi-mésogènes (4) sont augmentés.

**9.** Procédé de production d'un élément optique à commande électrique avec une cellule Kerr remplie de fluide Kerr avec deux substrats (1) et une couche conductrice (2) appliquée à la surface intérieure du substrat (1), **caractérisé en ce que**

a) le fluide Kerr (K) est un mélange de molécules en forme de tige (5) et non en forme de tige (4) en tant que composites actifs, mésogènes réactifs (8), photoinitiateurs (6) et monomères aliphatiques (7),
b) le liquide Kerr (K) est rempli dans une cellule Kerr (K),
c) le liquide Kerr (K) est refroidi à une température T inférieure à la température ambiante RT, à laquelle se forme une phase LC avec une orientation homéotrope,
d) des radicaux sont générés par le rayonnement UV des couches orientées homéotropes, qui provoquent la polymérisation des semi-mésogènes réactifs orientés (8), de telle sorte qu'un réseau anisotrope à mailles larges et lâche (9) dérivent des mésogènes (10) réticulés avec les monomères aliphatiques (7) dans le fluide de Kerr (K),

de sorte que sans la tension U dans la plage de température de travail RT le composite de molécules en forme de bâtonnet (5) avec un grand moment dipolaire et de molécules dipolaires non en forme de bâtonnet (4) à nouveau est isotrope et lorsque la tension U est appliquée, les molécules du composite s'orientent en direction des lignes de champ E.

**10.** Procédé selon la revendication 9, **caractérisé en ce qu'**une couche d'orientation (3) conduisant à une orientation homéotrope contient des groupes photoréticulables ou photopolymérisables.

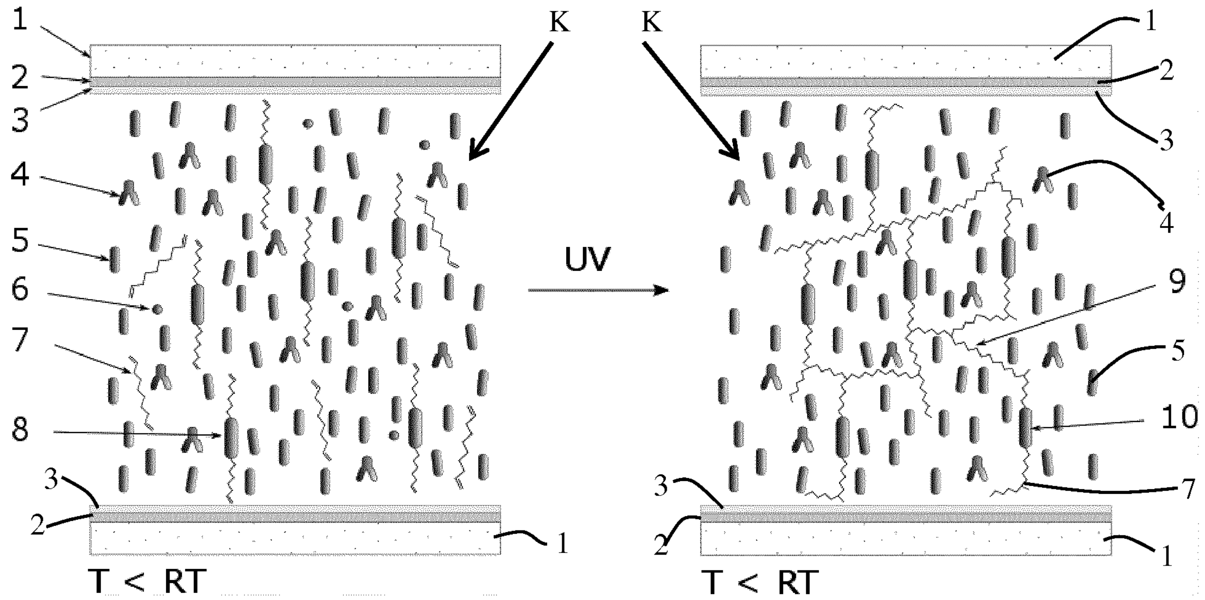


FIG. 1

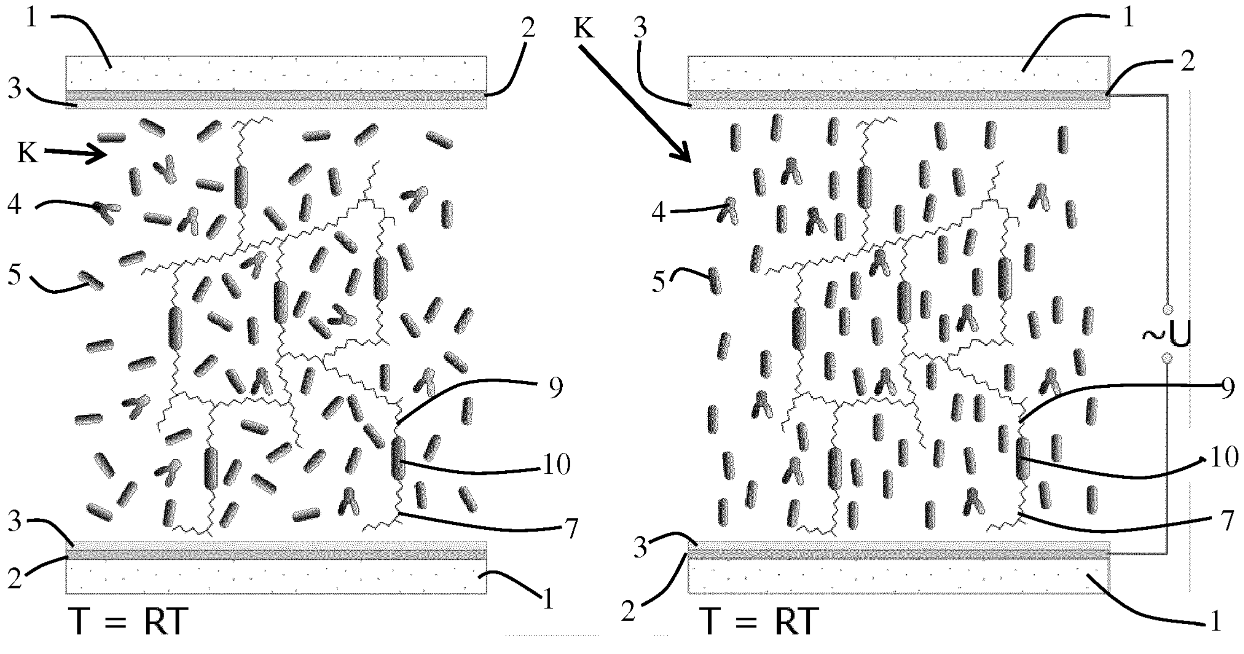


FIG. 2

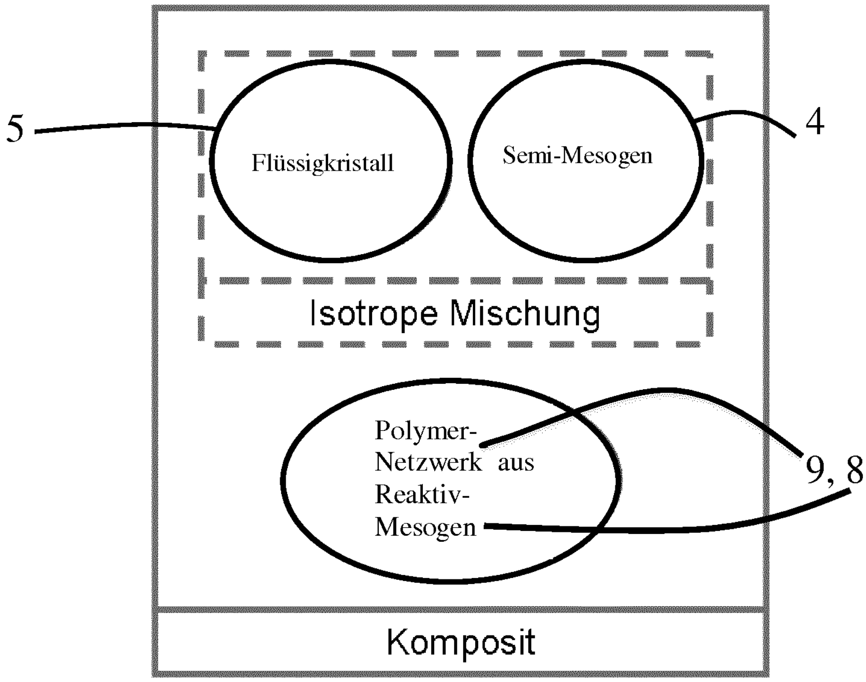
5
Flüssigkristall
Semi-Mesogen
4
Isotrope Mischung
Polymer-
Netzwerk aus
Reaktiv-
Mesogen
9, 8
Komposit

FIG. 3

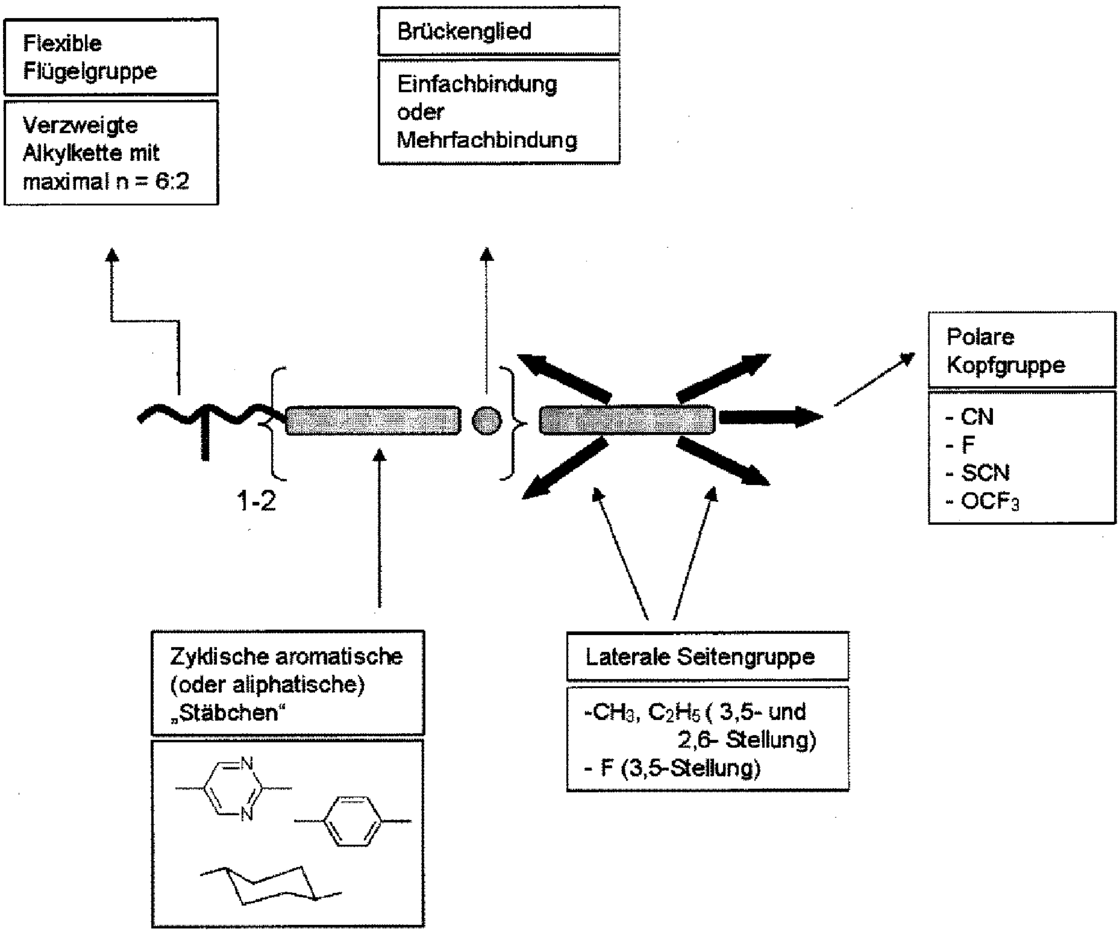
Flexible
Flügelgruppe
Verzweigte
Alkylkette mit
maximal n = 6:2
Brückenglied
Einfachbindung
oder
Mehrfachbindung
Polare
Kopfgruppe
- CN
- F
- SCN
- OCF3
1-2
Zyklische aromatische
(oder aliphatische)
„Stäbchen“
Laterale Seitengruppe
-CH3, C2H5 ( 3,5- und
2,6- Stellung)
- F (3,5-Stellung)

FIG. 4

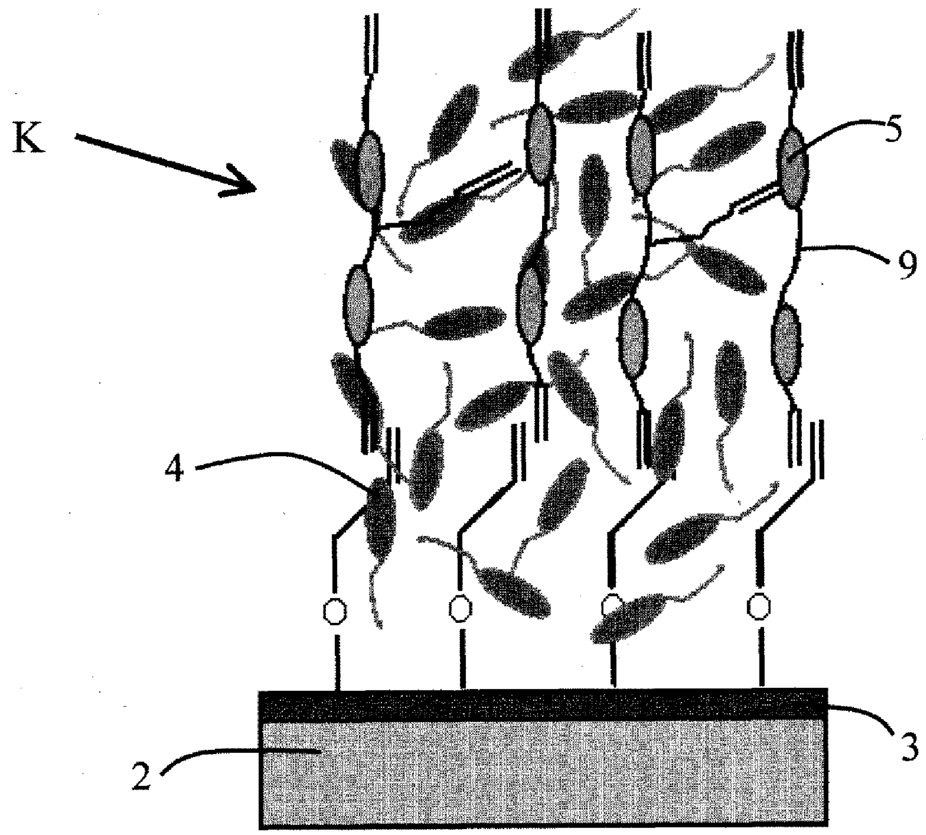


FIG. 5a

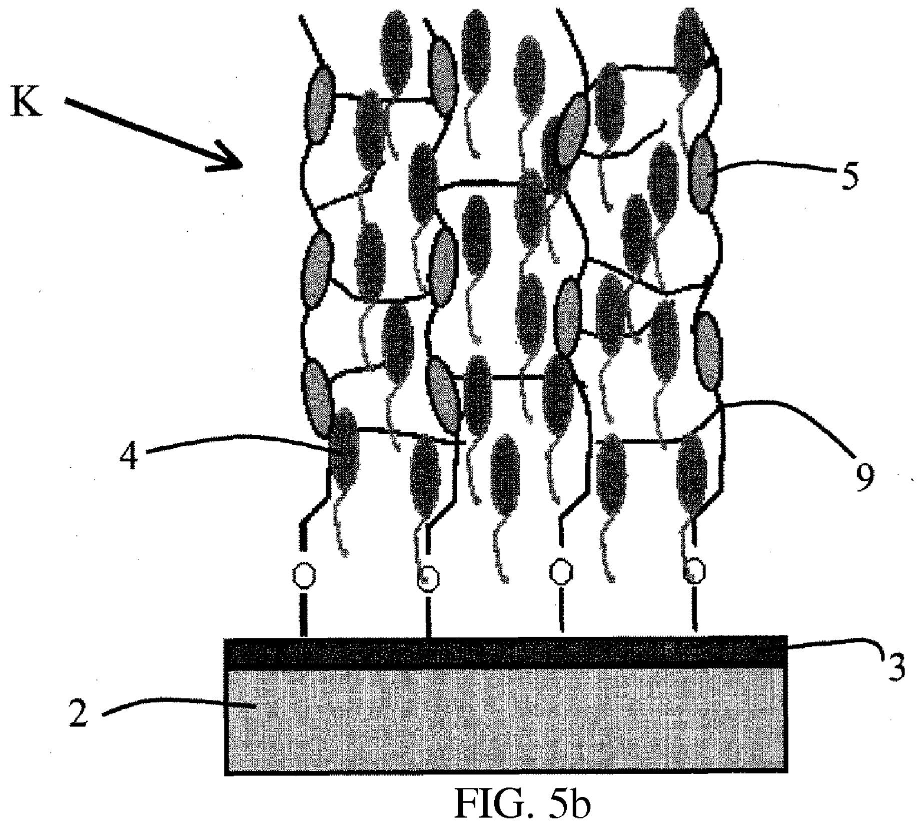


FIG. 5b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 555249 A
- DE 622368 A
- WO 2004046796 A1
- WO 2004046796 A
- EP 1155355 B1
- DE 2828910 A1
- EP 1463970 B1


### In der Beschreibung aufgeführte Nicht-Patentliteratur


- **ZINTH, W.** Optik. Oldenbourg-Verlag, 2011
- *J. Chem. Soc, Faraday Trans. 2,* 1976, vol. 72, 1447-1458
- *Appl. Phys. Lett.,* 2011, vol. 98, 023502
- **DUNMUR D. A. ; TOMES A. E .** *Mol. Cryst. Liq. Cryst.,* 1981, vol. 76, 231
- *J. Phys. D: Appl. Phys.,* 2009, vol. 42, 112002
- *Biomed. Opt. Express,* 2014, vol. 5 (2), 645-652
- *Biomed. Opt. Express,* 2014, vol. 5 (6), 1877-1885
- Electro-optic Kerr effect in polymer-stabilized isotropic liquid crystals. **YANG YOUNG-CHEOL et al.** APPLIED PHYSICS LETTERS. A I P PUBLISHING LLC, 13. Januar 2011, vol. 98, 23502-23502
- **A.Y.G. ; KO, S.W. ; HUANG, S.H. ; CHEN, Y.Y. ; LIN, T.H.** *Opt. Express,* 2011, vol. 19, 2294-2300
- **REN, H. ; LIN, Y.H. ; FAN, Y.H. ; WU, S.T.** *Appl. Phys. Lett.,* 2005, vol. 86, 141110
- **LIN, Y.H. ; REN, H. ; WU, Y.H. ; ZHAO, Y. ; FANG, J. ; GE, Z. ; WU, S.T.** *Opt. Express,* 2005, vol. 13, 8746-8752
- **WANG, B. ; YE, M. ; SATO, S.** *Opt. Commun.,* 2005, vol. 250, 266-273
- **D.-K. YANG ; S.-T. WU.** Fundamentals of Liquid Crystal Devices. John Wiley, 2006
- **J. XIANG ; O. D. LAVRENTOVICH.** *Appl. Phys. Lett.,* 2013, vol. 103, 051112
- **B. GOLOVIN ; S. V. SHIYANOVSKII ; O. D. LAVRENTOVICH.** *Appl. Phys. Lett.,* 2003, vol. 83, 3864
- **G. POLUSHIN ; V. B. ROGOZHIN ; E. I. RYUMTSEV DOKLADY.** *Physical Chemistry,* 2015, vol. 465, 298-300
- **BING-XIANG LI ; VOLODYMYR BORSHCH ; SERGIJ V. SHIYANOVSKII ; SHAO-BIN LIU ; OLEG D. LAVRENTOVICH.** *Appl. Phys. Lett.,* 2014, vol. 104, 201105
- **SU XU ; YAN LI ; YIFAN LIU ; JIE SUN ; HONGWEN REN ; SHIN-TSON WU.** *Micromachines,* 2014, vol. 5, 300-324
- **Y. HASEBA ; H. KIKUCHI.** *Mol. Cryst. Liq. Cryst.,* 2007, vol. 470, 1
- **YOUNG-CHEOL YANG ; DENG-KE YANG.** *Applied Physics Letters,* 2011, vol. 98, 023502
- **F. COSTACHE.** *M. Blasl Optik & Photonik,* Dezember 2011, vol. 6 (4), 29-31
- **A. BOLLER ; M. CEREGHETTI ; H. SCHERRER.** *Z. Naturforsch.,* 1978, vol. 33, 433
- **P. KIRSCH ; A. HAHN.** *Eur. J. of Org. Chem.,* 2005, vol. 14, 3095-3100